(19) **Europäisches Patentamt / European Patent Office / Office européen des brevets**

(11) **EP 4 280 520 A1**

(12) # EUROPEAN PATENT APPLICATION
published in accordance with Art. 153(4) EPC

(43) Date of publication:
**22.11.2023 Bulletin 2023/47**

(21) Application number: **22739701.5**

(22) Date of filing: **13.01.2022**

(51) International Patent Classification (IPC):
**H04L 5/00** (2006.01)   **H04W 64/00** (2009.01)
**H04W 72/12** (2023.01)

(52) Cooperative Patent Classification (CPC):
**H04L 5/00; H04W 64/00; H04W 72/12**

(86) International application number:
**PCT/KR2022/000625**

(87) International publication number:
**WO 2022/154506 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.01.2021 KR 20210004465**

(71) Applicant: **LG Electronics Inc.**
**Yeongdeungpo-gu**
**Seoul 07336 (KR)**

(72) Inventors:
• **CHA, Hyunsu**
  **Seoul 06772 (KR)**
• **YANG, Suckchel**
  **Seoul 06772 (KR)**
• **LEE, Jeongsu**
  **Seoul 06772 (KR)**

(74) Representative: **Plasseraud IP**
  **66, rue de la Chaussée d'Antin**
  **75440 Paris Cedex 09 (FR)**

(54) **METHOD FOR TRANSMITTING/RECEIVING SIGNAL IN WIRELESS COMMUNICATION SYSTEM, AND DEVICE FOR SUPPORTING SAME**

(57)   Various embodiments relate to a next generation wireless communication system for supporting a data transmission rate and the like higher than that of a 4th generation (4G) wireless communication system. According to various embodiments, a method for transmitting/receiving a signal in a wireless communication system, and an apparatus supporting same can be provided, and various other embodiments can be provided.

**FIG. 19**

EP 4 280 520 A1

**Description**

**TECHNICAL FIELD**

Various embodiments are related to a wireless communication system.

**BACKGROUND**

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/UEs sensitive to reliability and latency has been discussed.

**DISCLOSURE**

**TECHNICAL PROBLEM**

Various embodiments may provide a method and apparatus for transmitting and receiving a signal in a wireless communication system.
Various embodiments may provide a positioning method based on timing measurement and an apparatus supporting the same.
It will be appreciated by persons skilled in the art that the objects that could be achieved with the various embodiments are not limited to what has been particularly described hereinabove and the above and other objects that the various embodiments could achieve will be more clearly understood from the following detailed description.

**TECHNICAL SOLUTION**

Various embodiments may provide a method of transmitting and receiving a signal in a wireless communication system and apparatus for supporting the same.
According to various embodiment, there may be provided a method performed by a user equipment (UE) configured to operate in a wireless communication system.
According to various embodiments, the method may include: transmitting uplink control information (UCI) over a physical uplink control channel (PUCCH), wherein the UCI may include one or more bits for a request for a reference signal for positioning; based on the one or more bits having a first value, (i) receiving first resource configuration information for reception of a positioning reference signal (PRS) for the positioning and (ii) receiving the PRS based on the first resource configuration information; and based on the one or more bits having a second value, (i) receiving second resource configuration information for transmission of a sounding reference signal (SRS) for the positioning and (ii) transmitting the SRS based on the second resource configuration information.
According to various embodiments, based on the one or more bits being one bit in size: the one or more bits having the first value may be mapped to a request for an on-demand PRS; and the one or more bits having the second value may be mapped to a request for an on-demand SRS.
According to various embodiments, based on the one or more bits being two bits in size: the one or more bits having the first value may be mapped to a request for an on-demand PRS; the one or more bits having the second value may be mapped to a request for an on-demand SRS; and the one or more bits having a third value may be mapped to a request for both the on-demand PRS and the on-demand SRS.
According to various embodiments, the method may further include, based on the one or more bits having the third value: receiving the first resource configuration information; receiving the PRS based on the first resource configuration information; receiving the second resource configuration information; and transmitting the SRS based on the second resource configuration information.
According to various embodiments, the one or more bits having a fourth value may be mapped to at least one of a reserved state or an on-demand report.
According to various embodiments, the PUCCH may be PUCCH format 0 or PUCCH format 1. The one or more bits may include information obtained by jointly encoding at least one of the request for the reference signal, hybrid automatic repeat request (HARQ) acknowledgment/negative-acknowledgment (ACK/NACK) information, scheduling request (SR) information, or channel state information (CSI). The jointly encoded information may be based on a cyclic shift index related to generation of a sequence for the PUCCH.

According to various embodiments, the first resource configuration information may include at least one of information on one or more PRS resources, information on a PRS resource set including the one or more PRS resources, information on a positioning frequency layer, or information on one or more transmission and reception points (TRPs).

According to various embodiments, the second resource configuration information may include at least one of information on one or more SRS resources or information on an SRS resource set including the one or more SRS resources.

According to various embodiments, the first resource configuration information and the second resource configuration information may be received over a group-common physical downlink control channel (GC-PDCCH).

According to various embodiments, the GC-PDCCH may include: (i) a bit field indicating whether the GC-PDCCH is related to triggering of the reference signal; or (ii) a cyclic redundancy check (CRC) scrambled with a radio network temporary identifier (RNTI) indicating whether the GC-PDCCH is related to triggering of the reference signal.

According to various embodiment, there may be provided a UE configured to operate in a wireless communication system.

According to various embodiment, the UE may include: a transceiver; and at least one processor coupled to the transceiver.

According to various embodiments, the at least one processor may be configured to: transmit UCI over a PUCCH, wherein the UCI may include one or more bits for a request for a reference signal for positioning; based on the one or more bits having a first value, (i) receive first resource configuration information for reception of a PRS for the positioning and (ii) receive the PRS based on the first resource configuration information; and based on the one or more bits having a second value, (i) receive second resource configuration information for transmission of an SRS for the positioning and (ii) transmit the SRS based on the second resource configuration information.

According to various embodiments, based on the one or more bits being two bits in size: the one or more bits having the first value may be mapped to a request for an on-demand PRS; the one or more bits having the second value may be mapped to a request for an on-demand SRS; and the one or more bits having a third value may be mapped to a request for both the on-demand PRS and the on-demand SRS.

According to various embodiment, the at least one processor may be configured to communicate with at least one of a mobile UE, a network, or an autonomous vehicle other than a vehicle including the UE.

According to various embodiment, there may be provided a method performed by a base station configured to operate in a wireless communication system.

According to various embodiments, the method may include: receiving UCI over a PUCCH, wherein the UCI may include one or more bits for a request for a reference signal for positioning; based on the one or more bits having a first value, (i) transmitting first resource configuration information for transmission of a PRS for the positioning and (ii) transmitting the PRS related to the first resource configuration information; and based on the one or more bits having a second value, (i) transmitting second resource configuration information for transmission of an SRS for the positioning and (ii) receiving the SRS related to the second resource configuration information.

According to various embodiment, there may be provided a base station configured to operate in a wireless communication system.

According to various embodiment, the base station may include: a transceiver; and at least one processor coupled to the transceiver.

According to various embodiments, the at least one processor may be configured to: receive UCI over a PUCCH, wherein the UCI may include one or more bits for a request for a reference signal for positioning; and based on the one or more bits having a first value, (i) transmit first resource configuration information for transmission of a PRS for the positioning.

The at least one processor may be configured to (ii) transmit the PRS related to the first resource configuration information. Based on the one or more bits having a second value, the at least one processor may be configured to (i) transmit second resource configuration information for transmission of an SRS for the positioning and (ii) receive the SRS related to the second resource configuration information.

According to various embodiment, there may be provided an apparatus configured to operate in a wireless communication system.

According to various embodiment, the apparatus may include: at least one processor; and at least one memory operably coupled to the at least one processor and configured to store one or more instructions that, based on execution, cause the at least one processor to perform operations.

According to various embodiments, the operations may include: transmitting UCI over a PUCCH, wherein the UCI may include one or more bits for a request for a reference signal for positioning; based on the one or more bits having a first value, (i) receiving first resource configuration information for reception of a PRS for the positioning and (ii) receiving the PRS based on the first resource configuration information; and based on the one or more bits having a second value, (i) receiving second resource configuration information for transmission of an SRS for the positioning and (ii) transmitting the SRS based on the second resource configuration information.

According to various embodiment, there may be provided a non-transitory processor-readable medium configured to store one or more instructions that cause at least one processor to perform operations.

According to various embodiments, the operations may include: transmitting UCI over a PUCCH, wherein the UCI may include one or more bits for a request for a reference signal for positioning; based on the one or more bits having a first value, (i) receiving first resource configuration information for reception of a PRS for the positioning and (ii) receiving the PRS based on the first resource configuration information; and based on the one or more bits having a second value, (i) receiving second resource configuration information for transmission of an SRS for the positioning and (ii) transmitting the SRS based on the second resource configuration information.

It will be understood by those skilled in the art that the above-described embodiments are merely part of various embodiments of the present disclosure, and various modifications and alternatives could be developed from the following technical features of the present disclosure.

## ADVANTAGEOUS EFFECTS

According to various embodiments, a signal may be effectively transmitted and received in a wireless communication system.

According to various embodiments, positioning may be effectively performed in a wireless communication system.

According to various embodiments, methods for requesting an on-demand reference signal (RS) for positioning may be explicitly proposed.

It will be appreciated by persons skilled in the art that the effects that can be achieved with the various embodiments are not limited to what has been particularly described hereinabove and other advantages of the various embodiments will be more clearly understood from the following detailed description taken in conjunction with the accompanying drawings.

## BRIEF DESCRIPTION OF THE DRAWINGS

The accompanying drawings are provided to help understanding of various embodiments, along with a detailed description. However, the technical features of various embodiments are not limited to a specific drawing, and features disclosed in each drawing may be combined with each other to constitute a new embodiment. Reference numerals in each drawing denote structural elements.

FIG. 1 is a diagram illustrating physical channels and a signal transmission method using the physical channels, which may be used in various embodiments.

FIG. 2 is a diagram illustrating a radio frame structure in a new radio access technology (NR) system to which various embodiments are applicable.

FIG. 3 illustrates an example of resource grid to which various embodiments are applicable.

FIG. 4 is a diagram illustrating mapping of physical channels in a slot, to which various embodiments are applicable.

FIG. 5 is a diagram illustrating example of slot formats according to various embodiments.

FIG. 6 is a diagram illustrating a positioning protocol configuration for positioning a user equipment (UE), to which various embodiments are applicable.

FIG. 7 illustrates an exemplary system architecture for measuring positioning of a UE to which various embodiments are applicable.

FIG. 8 illustrates an implementation example of a network for UE positioning.

FIG. 9 is a diagram illustrating protocol layers for supporting LTE positioning protocol (LPP) message transmission, to which various embodiments are applicable.

FIG. 10 is a diagram illustrating protocol layers for supporting NR positioning protocol a (NRPPa) protocol data unit (PDU) transmission, to which various embodiments are applicable.

FIG. 11 is a diagram illustrating an observed time difference of arrival (OTDOA) positioning method, to which various embodiments are applicable.

FIG. 12 is a diagram illustrating a multi-round trip time (multi-RTT) positioning method to which various embodiments are applicable.

FIG. 13 is a simplified diagram illustrating a method of operating a UE, a transmission and reception point (TRP), a location server, and/or a location management function (LMF) according to various embodiments.

FIG. 14 is a diagram schematically illustrating an operation method for a UE, a TRP, a location server, and/or an LMF according to various embodiments.

FIG. 15 is a diagram illustrating an example of positioning reference signal (PRS) request according to various embodiments.

FIG. 16 is a diagram illustrating an example of sounding reference signal (SRS) request according to various embodiments.

FIG. 17 is a diagram illustrating an example of PRS/SRS request according to various embodiments.

FIG. 18 is a diagram illustrating another example of PRS/SRS request according to various embodiments.

FIG. 19 is a diagram schematically illustrating a method of operating a UE and a network node according to various embodiments.

FIG. 20 is a flowchart illustrating a method of operating the UE according to various embodiments.

FIG. 21 is a flowchart illustrating a method of operating the network node according to various embodiments.

FIG. 22 is a block diagram illustrating an apparatus for implementing various embodiments of the present disclosure.

FIG. 23 illustrates an example of communication system to which various embodiments of the present disclosure are applied.

FIG. 24 illustrates example of wireless devices to which various embodiments of the present disclosure are applicable.

FIG. 25 illustrates other example of wireless devices to which various embodiments of the present disclosure are applied.

FIG. 26 illustrates an example of portable device to which various embodiments of the present disclosure are applied.

FIG. 27 illustrates an example of vehicle or autonomous driving vehicle to which various embodiments of the present disclosure.

## DETAILED DESCRIPTION

Various embodiments are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

Various embodiments are described in the context of a 3GPP communication system (e.g., including LTE, NR, 6G, and next-generation wireless communication systems) for clarity of description, to which the technical spirit of the various embodiments is not limited. For the background art, terms, and abbreviations used in the description of the various embodiments, refer to the technical specifications published before the present disclosure. For example, the documents of 3GPP TS 36.211, 3GPP TS 36.212, 3GPP TS 36.213, 3GPP TS 36.300, 3GPP TS 36.321, 3GPP TS 36.331, 3GPP TS 36.355, 3GPP TS 36.455, 3GPP TS 37.355, 3GPP TS 37.455, 3GPP TS 38.211, 3GPP TS 38.212, 3GPP TS 38.213, 3GPP TS 38.214, 3GPP TS 38.215, 3GPP TS 38.300, 3GPP TS 38.321, 3GPP TS 38.331, 3GPP TS 38.355, 3GPP TS 38.455, and so on may be referred to.

### 1. 3GPP System

#### 1.1. Physical Channels and Signal Transmission and Reception

In a wireless access system, a UE receives information from a base station on a downlink (DL) and transmits information to the base station on an uplink (UL). The information transmitted and received between the UE and the base station includes general data information and various types of control information. There are many physical channels according to the types/usages of information transmitted and received between the base station and the UE.

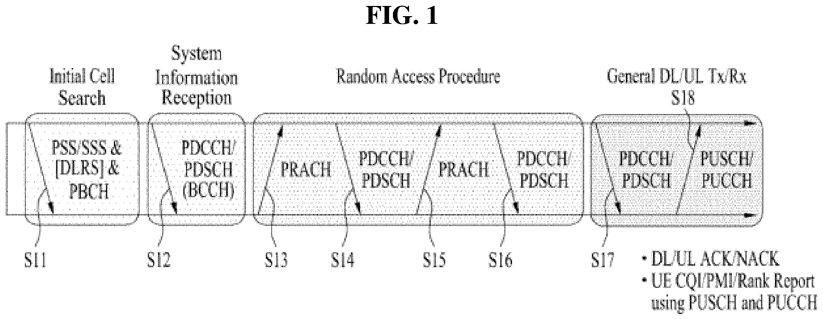

FIG. 1 is a diagram illustrating physical channels and a signal transmission method using the physical channels, which may be used in various embodiments.

When powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

### 1.2. Physical Resource

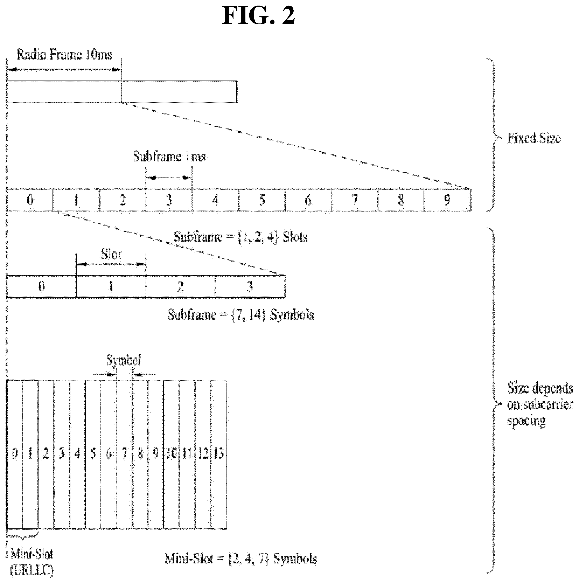

FIG. 2 illustrates an NR system based radio frame structure which can be used for various embodiments.

The NR system may support multiple numerologies. A numerology may be defined by a subcarrier spacing (SCS) and a cyclic prefix (CP) overhead. Multiple SCSs may be derived by scaling a default SCS by an integer N (or $\mu$). Further, even though it is assumed that a very small SCS is not used in a very high carrier frequency, a numerology to be used may be selected independently of the frequency band of a cell. Further, the NR system may support various frame structures according to multiple numerologies.

Now, a description will be given of OFDM numerologies and frame structures which may be considered for the NR system. Multiple OFDM numerologies supported by the NR system may be defined as listed in Table 1. For a bandwidth part, $\mu$ and a CP are obtained from RRC parameters provided by the BS.

[Table 1]

| $\mu$ | $\Delta f = 2^{\mu} \cdot 15\,[kHz]$ | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

In NR, multiple numerologies (e.g., SCSs) are supported to support a variety of 5G services. For example, a wide area in cellular bands is supported for an SCS of 15kHz, a dense-urban area, a lower latency, and a wider carrier bandwidth are supported for an SCS of 30kHz/60kHz, and a larger bandwidth than 24.25GHz is supported for an SCS of 60kHz or more, to overcome phase noise.

An NR frequency band is defined by two types of frequency ranges, FR1 and FR2. FR1 may be a sub-6GHz range, and FR2 may be an above-6GHz range, that is, a millimeter wave (mmWave) band.

Table 2 below defines the NR frequency band, by way of example.

[Table 2]

| Frequency range designation | Corresponding frequency range | Subcarrier Spacing |
|---|---|---|
| FR1 | 410 MHz- - 7125 M Hz | 15, 30, 60kHz |
| FR2 | 24250 MHz - 52600 MHz | 60, 120, 240kHz |

Regarding a frame structure in the NR system, the time-domain sizes of various fields are represented as multiples of a basic time unit for NR, Tc = 1/($\triangle$fmax*Nf) where $\triangle$fmax = 480*103 Hz and a value Nf related to a fast Fourier transform (FFT) size or an inverse fast Fourier transform (IFFT) size is given as Nf = 4096. Tc and Ts which is an LTE-based time unit and sampling time, given as Ts = 1/((15kHz)*2048) are placed in the following relationship: Ts/Tc = 64. DL and UL transmissions are organized into (radio) frames each having a duration of Tf = ($\triangle$fmax*Nf/100)*Tc = 10ms. Each radio frame includes 10 subframes each having a duration of Tsf = ($\triangle$fmax*Nf/1000)*Tc = 1ms. There may exist one set of frames for UL and one set of frames for DL. For a numerology $\mu$, slots are numbered with nus E {0,...,Nslot,$\mu$subframe-1} in an increasing order in a subframe, and with nus,f E {0,...,Nslot,$\mu$frame-1} in an increasing order in a radio frame. One slot includes Npsymb consecutive OFDM symbols, and Nusymb depends on a CP. The start of a slot n$\mu$s in a subframe is aligned in time with the start of an OFDM symbol nu$\mu$s*N$\mu$symb in the same subframe.
Table 3 lists the number of symbols per slot, the number of slots per frame, and the number of slots per subframe, for each SCS in a normal CP case, and Table 4 lists the number of symbols per slot, the number of slots per frame, and the number of slots per subframe, for each SCS in an extended CP case.

[Table 3]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N^{slot}_{symb}$ | $N^{frame,\mu}_{slot}$ | $N^{subframe,\mu}_{slot}$ |
|---|---|---|---|
| 2 | 12 | 40 | 4 |

In the above tables, Nslotsymb represents the number of symbols in a slot, Nframe,pslot represents the number of slots in a frame, and Nsubframe,pslot represents the number of slots in a subframe.
In the NR system to which various embodiments of the present disclosure are applicable, different OFDM(A) numerologies (e.g., SCSs, CP lengths, and so on) may be configured for a plurality of cells which are aggregated for one UE. Accordingly, the (absolute time) period of a time resource including the same number of symbols (e.g., a subframe (SF), a slot, or a TTI) (generically referred to as a time unit (TU), for convenience) may be configured differently for the aggregated cells.
FIG. 2 illustrates an example with $\mu$=2 (i.e., an SCS of 60kHz), in which referring to Table 3, one subframe may include four slots. One subframe = 11, 2, 4} slots in FIG. 2, which is exemplary, and the number of slot(s) which may be included in one subframe is defined as listed in Table 3 or Table 4.
Further, a mini-slot may include 2, 4 or 7 symbols, fewer symbols than 2, or more symbols than 7.
Regarding physical resources in the NR system, antenna ports, a resource grid, resource elements (REs), resource blocks (RBs), carrier parts, and so one may be considered. The physical resources in the NR system will be described below in detail.
An antenna port is defined such that a channel conveying a symbol on an antenna port may be inferred from a channel conveying another symbol on the same antenna port. When the large-scale properties of a channel carrying a symbol on one antenna port may be inferred from a channel carrying a symbol on another antenna port, the two antenna ports may be said to be in a quasi co-located or quasi co-location (QCL) relationship. The large-scale properties include one or more of delay spread, Doppler spread, frequency shift, average received power, received timing, average delay, and a spatial reception (Rx) parameter. The spatial Rx parameter refers to a spatial (Rx) channel property parameter such as an angle of arrival.

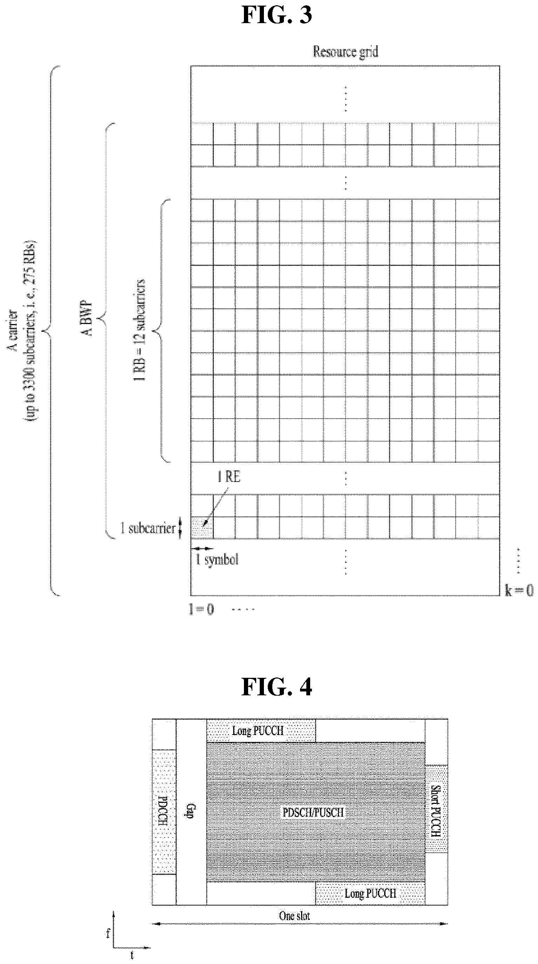

FIG. 3 illustrates an example of resource grid to which various embodiments are applicable.

Referring to FIG. 3, for each subcarrier spacing (SCS) and carrier, a resource grid is defined as $14 \times 2^{\mu}$ OFDM symbols by $N_{\text{grid}}^{\text{size},\mu} \times N_{\text{SC}}^{\text{RB}}$ subcarriers, where $N_{\text{grid}}^{\text{size},\mu}$ is indicated by RRC signaling from the BS. $N_{\text{grid}}^{\text{size},\mu}$ may vary according to an SCS configuration $\mu$ and a transmission direction, UL or DL. There is one resource grid for an SCS configuration $\mu$, an antenna port p, and a transmission direction (UL or DL). Each element of the resource grid for the SCS configuration $\mu$ and the antenna port p is referred to as an RE and uniquely identified by an index pair (k, 1) where k represents an index in the frequency domain, and 1 represents a symbol position in the frequency domain relative to a reference point. The RE (k, 1) for the SCS configuration $\mu$ and the antenna port p corresponds to a physical resource and a complex value $a_{k,l}^{(p,\mu)}$. An RB is defined as $N_{\text{SC}}^{\text{RB}} = 12$ consecutive subcarriers in the frequency domain.

Considering that the UE may not be capable of supporting a wide bandwidth supported in the NR system, the UE may be configured to operate in a part (bandwidth part (BWP)) of the frequency bandwidth of a cell.

FIG. 4 is a diagram illustrating example of mapping of physical channels in a slot, to which various embodiments are applicable.

One slot may include all of a DL control channel, DL or UL data, and a UL control channel. For example, the first N symbols of a slot may be used to transmit a DL control channel (hereinafter, referred to as a DL control region), and the last M symbols of the slot may be used to transmit a UL control channel (hereinafter, referred to as a UL control region). Each of N and M is an integer equal to or larger than 0. A resource area (hereinafter, referred to as a data region) between the DL control region and the UL control region may be used to transmit DL data or UL data. There may be a time gap for DL-to-UL or UL-to-DL switching between a control region and a data region. A PDCCH may be transmitted in the DL control region, and a PDSCH may be transmitted in the DL data region. Some symbols at a DL-to-UL switching time in the slot may be used as the time gap.

The BS transmits related signals to the UE on DL channels as described below, and the UE receives the related signals from the BS on the DL channels.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping are performed on a codeword basis, and modulation symbols generated from each codeword are mapped to one or more layers (layer mapping). Each layer together with a demodulation reference signal (DMRS) is mapped to resources, generated as an OFDM symbol signal, and transmitted through a corresponding antenna port.

The PDCCH may deliver downlink control information (DCI), for example, DL data scheduling information, UL data scheduling information, and so on. The PUCCH may deliver uplink control information (UCI), for example, an acknowledgement/negative acknowledgement (ACK/NACK) information for DL data, channel state information (CSI), a scheduling request (SR), and so on.

The PDCCH carries downlink control information (DCI) and is modulated in quadrature phase shift keying (QPSK). One PDCCH includes 1, 2, 4, 8, or 16 control channel elements (CCEs) according to an aggregation level (AL). One CCE includes 6 resource element groups (REGs). One REG is defined by one OFDM symbol by one (P)RB .

The PDCCH is transmitted in a control resource set (CORESET). A CORESET is defined as a set of REGs having a given numerology (e.g., SCS, CP length, and so on). A plurality of CORESETs for one UE may overlap with each other in the time/frequency domain. A CORESET may be configured by system information (e.g., a master information block (MIB)) or by UE-specific higher layer (RRC) signaling. Specifically, the number of RBs and the number of symbols (up to 3 symbols) included in a CORESET may be configured by higher-layer signaling.

The UE acquires DCI delivered on a PDCCH by decoding (so-called blind decoding) a set of PDCCH candidates. A set of PDCCH candidates decoded by a UE are defined as a PDCCH search space set. A search space set may be a common search space (CSS) or a UE-specific search space (USS). The UE may acquire DCI by monitoring PDCCH candidates in one or more search space sets configured by an MIB or higher-layer signaling.

The UE transmits related signals on later-described UL channels to the BS, and the BS receives the related signals on the UL channels from the UE.

The PUSCH delivers UL data (e.g., a UL-shared channel transport block (UL-SCH TB)) and/or UCI, in cyclic prefix-orthogonal frequency division multiplexing (CP-OFDM) waveforms or discrete Fourier transform-spread-orthogonal division multiplexing (DFT-s-OFDM) waveforms. If the PUSCH is transmitted in DFT-s-OFDM waveforms, the UE transmits the PUSCH by applying transform precoding. For example, if transform precoding is impossible (e.g., transform precoding is disabled), the UE may transmit the PUSCH in CP-OFDM waveforms, and if transform precoding is possible (e.g., transform precoding is enabled), the UE may transmit the PUSCH in CP-OFDM waveforms or DFT-s-OFDM waveforms. The PUSCH transmission may be scheduled dynamically by a UL grant in DCI or semi-statically by higher-layer signaling (e.g., RRC signaling) (and/or layer 1 (L1) signaling (e.g., a PDCCH)) (a configured grant). The PUSCH transmission may be performed in a codebook-based or non-codebook-based manner.

The PUCCH delivers UCI, an HARQ-ACK, and/or an SR and is classified as a short PUCCH or a long PUCCH according to the transmission duration of the PUCCH.

Table 5 shows PUCCH formats.

[Table 5]

| PUCCH format | Length in OFDM symbols $N_{\text{symb}}^{\text{PUCCH}}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 may carry UCI of up to two bits and be mapped and transmitted based on a sequence. Specifically, the UE may transmit specific UCI to the BS by transmitting one of a plurality of sequences over a PUCCH of PUCCH format 0. Only when the UE transmits a positive SR, the UE may transmit the PUCCH of PUCCH format 0 on a PUCCH resource for a corresponding SR configuration.

PUCCH format 1 may carry UCI of up to two bits. Modulation symbols may be spread by an orthogonal cover code (OCC) in the time domain (which is configured differently depending on the presence of frequency hopping). A DMRS may be transmitted in symbols in which no modulation symbols are transmitted (i.e., transmitted in time division multiplexing (TDM)).

PUCCH format 2 may carry UCI of more than two bits. Modulation symbols may be transmitted in frequency division multiplexing (FDM) with a DMRS. The DMRS may be located in symbols #1, #4, #7, and #10 in a given RB with a density of 1/3. A pseudo noise (PN) sequence may be used for a DMRS sequence. For 2-symbol PUCCH format 2, frequency hopping may be enabled.

PUCCH format 3 may not support UE multiplexing in the same PRBs. PUCCH format 3 may carry UCI of more than two bits. In other words, PUCCH resources of PUCCH format 3 may include no OCC. Modulation symbols may be transmitted in TDM with a DMRS.

PUCCH format 4 may support multiplexing of up to four UEs in the same PRBs and carry UCI of more than two bits. In other words, PUCCH resources of PUCCH format 4 may include OCCs. Modulation symbols may be transmitted in TDM with a DMRS.

## 1.3. Slot Configuration

Basically, a slot format may indicate the purpose of a symbol unit within a corresponding slot. Specifically, the slot format may denote one of Downlink (D), Uplink (U), and Flexible (F) for each symbol. Slot format related information may be transmitted in one or more of the following signals:

- Static or semi-static slot format indication (SFI) through higher layer signaling (e.g., *TDD-UL-DL-ConfigurationCommon* and/or *TDD-UL-DL-ConfigDedicated)*
- Measurement related scheduling signal (e.g., measurement related signal configured by UE-specific RRC signaling)
- Dynamic SFI (e.g., signal transmitted in DCI format 2_0)
- UE-specific data transmission scheduling signal (e.g., UE-specific DCI)

The static or semi-static SFI may be provided by cell-specific RRC signaling (e.g., *TDD-UL-DL-Configuration-Common*) or UE-specific RRC signaling (e.g., *TDD-UL-DL-ConfigDedicated*). The measurement related signal may be provided by UE-specific RRC signaling, and the corresponding signal may indicate a periodic/semi-persistent CSI-RS, a periodic CSI report, a periodic/semi-persistent SRS, etc. The UE-specific data transmission related signal may include UE-specific DCI triggering a PUCCH along with an A/N for a PDSCH, PUSCH, or PDSCH, and DCI triggering an aperiodic measurement related signal such as an aperiodic CSI-RS, aperiodic SRS, etc.

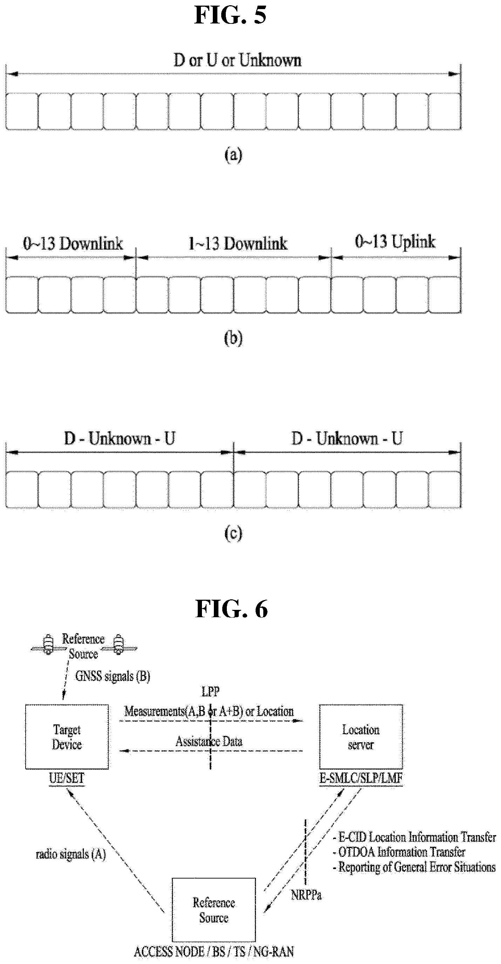

FIG. 5 is a diagram illustrating example of slot formats according to various embodiments. Specifically, FIG. 5 shows example of slot formats depending on the number of switching points according to various embodiments.

Slot formats include formats for zero, one, and two switching points. FIG. C5 illustrates various slot formats. Specifically, FIG. 6(a) illustrates a slot format for zero switching points, FIG. 6(b) illustrates a slot format for one switching point, and FIG. 6(c) illustrates a slot format for two switching points.

The slot format for zero switching points may include 14 DL symbols, 14 flexible symbols, or 14 UL symbols. The slot format for one switching point may be configured to start with zero or more DL symbols and end with zero or more UL symbols. The slot format for one switching point may include one or more flexible symbols and DL/UL symbols therebetween. The slot format for two switching points may be configured to include: first 7 symbols starting with zero or more DL symbols and ending with one or more UL symbols at the 7th symbol; and second 7 symbols starting with one or more DL symbols and ending with zero or more UL symbols. Each of the first 7 symbols and the second 7 symbols may include zero or more flexible symbols.

A maximum of 256 slot formats may be defined, and the configurations of these slot formats may be defined in specifications such as TS 38.211. The UE may be configured with a UE-specific SFI table based on the maximum 256 slot formats through higher layer signaling and receives a specific index of the UE-specific SFI table in DCI format 2_0 (or a group-common PDCCH).

For signals carrying the above-described slot format related information, the UE may determine slot formats based on the following priorities. Specifically, when the UE receives slot format related information in a plurality of signals, the UE may consider information indicated by the signals according to the following priorities only to check the usage of symbols indicated as flexible by a high priority signal.

Slot format information through cell-specific higher layer signaling (e.g., *TDD-UL-DL-ConfigurationCommon*) > slot format information through UE-specific higher layer signaling (e.g., *TDD-UL-DL-ConfigDedicated*) > slot format information on group-common PDCCH (e.g., DCI format 2_0) > UE-specific data transmission scheduling information > measurement related scheduling information.

Therefore, when a specific symbol in a slot is indicated to the UE as DL/UL by cell-specific RRC signaling or UE-specific RRC signaling, the UE may not expect that DCI format 2_0 (or a group-specific PDCCH including DCI format 2_0) indicates the specific symbol as UL/DL or flexible. When a specific symbol in a slot is indicated as flexible by DCI format 2_0 (or a group-specific PDCCH including DCI format 2_0), the UE may transmit and receive a related signal in the specific symbol only if the UE receives extra scheduling information (e.g., UE-specific scheduling DCI). On the other hand, if the UE receives no scheduling information separately, the UE may transmit/receive no signal in the specific symbol.

## 2. Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

### 2.1. Positioning Protocol configuration

FIG. 6 is a diagram illustrating an example of positioning protocol configuration for positioning a UE, to which various embodiments are applicable.

Referring to FIG. 6, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

**2.2. PRS (positioning reference signal)**

For such positioning, a positioning reference signal (PRS) may be used. The PRS is a reference signal used to estimate the position of the UE.

A positioning frequency layer may include one or more PRS resource sets, each including one or more PRS resources.

Sequence generation

A PRS sequence $r(m)$ ($m = 0,1, ...$) may be defined by Equation 1.

[Equation 1]

$$r(m) = \frac{1}{\sqrt{2}}\big(1 - 2c(m)\big) + j\frac{1}{\sqrt{2}}\big(1 - 2c(m+1)\big)$$

c(i) may be a pseudo-random sequence. A pseudo-random sequence generator may be initialized by Equation 2.

[Equation 2]

$$c_{\text{init}} = \left( 2^{22}\left\lfloor \frac{n_{\text{ID,seq}}^{\text{PRS}}}{1024} \right\rfloor + 2^{10}\big(N_{\text{symb}}^{\text{slot}}n_{\text{s,f}}^{\mu} + l + 1\big)\big(2\big(n_{\text{ID,seq}}^{\text{PRS}} \bmod 1024\big) + 1\big) \right.$$

$$\left. + \big(n_{\text{ID,seq}}^{\text{PRS}} \bmod 1024\big) \right) \bmod 2^{31}$$

$n_{\text{s,f}}^{\mu}$ may be a slot number in a frame in an SCS configuration $\mu$. A DL PRS sequence ID $n_{\text{ID,seq}}^{\text{PRS}} \in \{0,1,...,4095\}$ may be given by a higher-layer parameter (e.g., DL-PRS-SequenceId). 1 may be an OFDM symbol in a slot to which the sequence is mapped.

Mapping to physical resources in a DL PRS resource

A PRS sequence $r(m)$ may be scaled by $\beta_{\text{PRS}}$ and mapped to REs $(k, l)_{p,\mu}$, specifically by Equation 3. $(k, l)_{p,\mu}$ may represent an RE (k, 1) for an antenna port p and the SCS configuration $\mu$.

[Equation 3]

$$a_{k,l}^{(p,\mu)} = \beta_{\text{PRS}}\, r(m)$$

$$m = 0, 1, \ldots$$

$$k = mK_{\text{comb}}^{\text{PRS}} + \left( \left( k_{\text{offset}}^{\text{PRS}} + k' \right) \bmod K_{\text{comb}}^{\text{PRS}} \right)$$

$$l = l_{\text{start}}^{\text{PRS}}, l_{\text{start}}^{\text{PRS}} + 1, \ldots, l_{\text{start}}^{\text{PRS}} + L_{\text{PRS}} - 1$$

Herein, the following conditions may have to be satisfied:

- The REs $(k, l)_{p,\mu}$ are included in an RB occupied by a DL PRS resource configured for the UE;
- The symbol 1 not used by any SS/PBCH block used by a serving cell for a DL PRS transmitted from the serving cell or indicated by a higher-layer parameter SSB-positionInBurst for a DL PRS transmitted from a non-serving cell;
- A slot number satisfies the following PRS resource set-related condition;

$l_{\text{start}}^{\text{PRS}}$ is the first symbol of the DL PRS in the slot, which may be given by a higher-layer parameter DL-PRS-ResourceSymbolOffset. The time-domain size of the DL PRS resource, $L_{\text{PRS}} \in \{2,4,6,12\}$ may be given by a higher-layer parameter DL-PRS-NumSymbols. A comb size $K_{\text{comb}}^{\text{PRS}} \in \{2, 4, 6, 12\}$ may be given by a higher-layer parameter transmissionComb. A combination $\{L_{\text{PRS}}, K_{\text{comb}}^{\text{PRS}}\}$ of $L_{\text{PRS}}$ and $K_{\text{comb}}^{\text{PRS}}$ may be one of {2, 2}, 14, 2}, 16, 2}, {12, 2}, {4, 4}, {12, 4}, {6, 6}, { 12, 6} and/or {12, 12}. An RE offset $k_{\text{offset}}^{\text{PRS}} \in \{0, 1, \ldots, K_{\text{comb}}^{\text{PRS}} - 1\}$ may be given by combOffset. A frequency offset $k'$ may be a function of $l - l_{\text{start}}^{\text{PRS}}$ as shown in Table 8.

[Table 6]

| $K_{\text{comb}}^{\text{PRS}}$ | Symbol number within the downlink PRS resource $l - l_{\text{start}}^{\text{PRS}}$ | | | | | | | | | | | |
|---|---|---|---|---|---|---|---|---|---|---|---|---|
| | 0 | 1 | 2 | 3 | 4 | 5 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

k A reference point for k=0 may be the position of point A in a positioning frequency layer in which the DL PRS resource is configured. Point A may be given by a higher-layer parameter dl-PRS-PointA-r16.

Mapping to slots in a DL PRS resource set

A DL PRS resource included in a DL PRS resource set may be transmitted in a slot and a frame which satisfy the following Equation 4.

[Equation 4]

$$\left( N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}} \right) \bmod 2^{\mu} T_{\text{per}}^{\text{PRS}} \in \left\{ i T_{\text{gap}}^{\text{PRS}} \right\}_{i=0}^{T_{\text{rep}}^{\text{PRS}} - 1}$$

$N_{\text{slot}}^{\text{frame},\mu}$ may be the number of slots per frame in the SCS configuration $\mu$. $n_f$ may be a system frame number (SFN).

$n_{\text{s,f}}^{\mu}$ may be a slot number in a frame in the SCS configuration $\mu$. A slot offset $T_{\text{offset}}^{\text{PRS}} \in \{0, 1, ..., T_{\text{per}}^{\text{PRS}} - 1\}$ may be given by a higher-layer parameter *DL-PRS-ResourceSetSlotOffset*. A DL PRS resource slot offset $T_{\text{offset,res}}^{\text{PRS}}$ may be given by a higher layer parameter *DL-PRS-ResourceSlotOffset*. A periodicity $T_{\text{per}}^{\text{PRS}} \in \{4, 5, 8, 10, 16, 20, 32, 40, 64, 80, 160, 320, 640, 1280, 2560, 5120, 10240\}$ may be given by a higher-layer parameter *DL-PRS-Periodicity*. A repetition factor $T_{\text{rep}}^{\text{PRS}} \in \{1, 2, 4, 6, 8, 16, 32\}$ may be given by a higher-layer parameter DL-PRS-ResourceRepetitionFactor. A muting repetition factor $T_{\text{muting}}^{\text{PRS}}$ may be given by a higher-layer parameter *DL-PRS-MutingBitRepetitionFactor*. A time gap $T_{\text{gap}}^{\text{PRS}} \in \{1, 2, 4, 8, 16, 32\}$ may be given by a higher-layer parameter *DL-PRS-ResourceTimeGap*.

### 2.3. UE Positioning Architecture

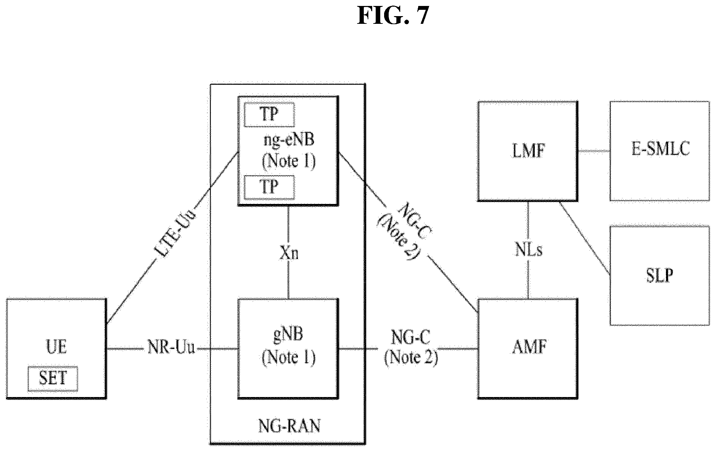

FIG. 7 illustrates an example of system architecture for measuring positioning of a UE to which various embodiments are applicable.

Referring to FIG. 7, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

### 2.4. Operation for UE Positioning

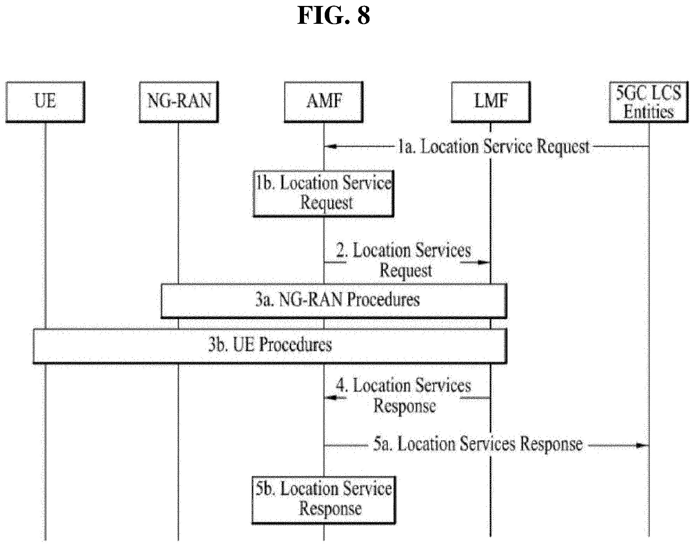

FIG. 8 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 8. In other words, in FIG. 8, it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 8. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

In step 4, the LMF may provide a location service response to the AMF. The location service response may include information as to whether UE positioning is successful and include a location estimate value of the UE. If the procedure of FIG. 8 has been initiated by step 1a, the AMF may transfer the location service response to a 5GC entity such as a GMLC. If the procedure of FIG. 8 has been initiated by step 1b, the AMF may use the location service response in order to provide a location service related to an emergency call.

### 2.5. Positioning Protocol

LTE Positioning Protocol (LPP)

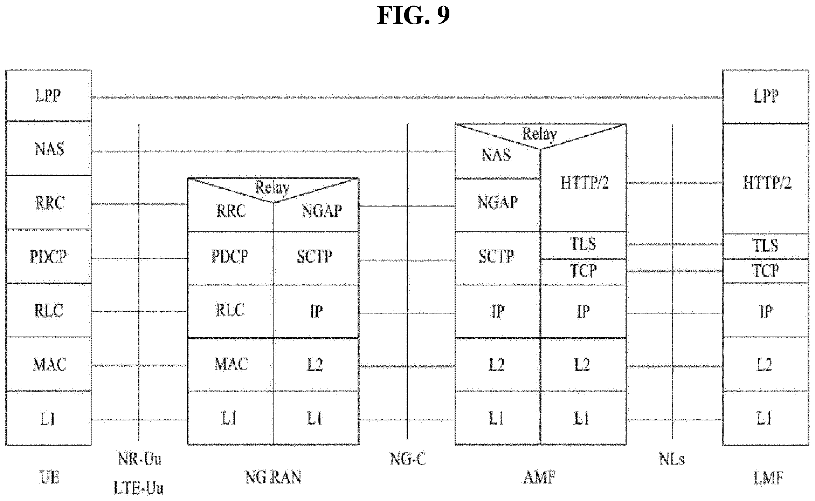

FIG. 9 illustrates an example of protocol layer used to support LPP message transfer between an LMF and a UE. An LPP protocol data unit (PDU) may be carried in a NAS PDU between an AMF and the UE.

Referring to FIG. 9, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

NR Positioning Protocol A (NRPPa)

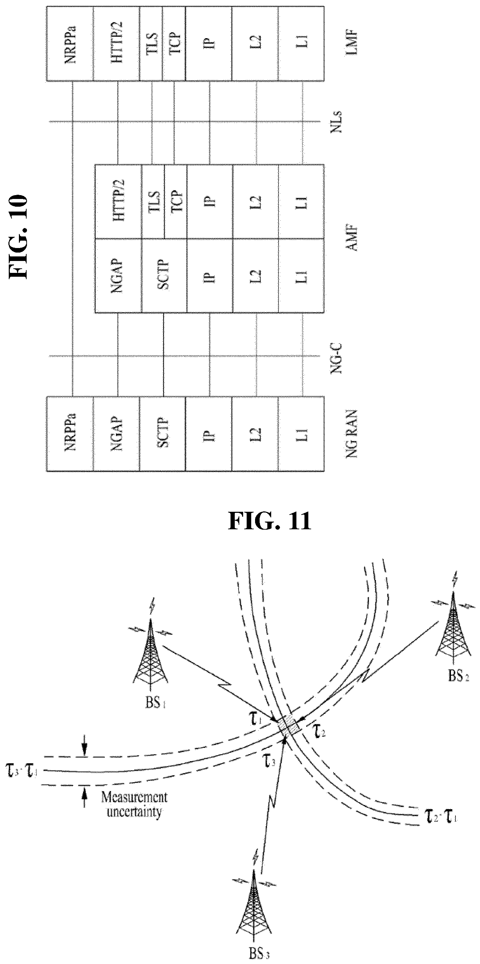

FIG. 10 illustrates an example of protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

### 2.6. Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference Of Arrival)

FIG. 11 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 5, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_i)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.

$$T_{ADV} \text{ Type 1} = \text{(ng-eNB Rx-Tx time difference)} + \text{(UE E-UTRA Rx-Tx time difference)}$$

$$TADV \text{ Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

Multi RTT (Multi-cell RTT)

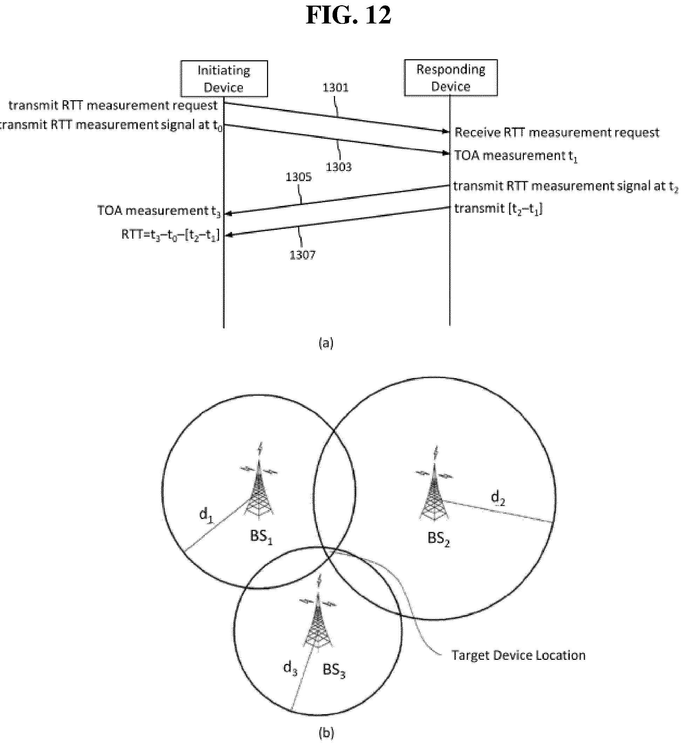

FIG. 12 is a diagram illustrating an example of multi-round trip time (multi-RTT) positioning method to which various embodiments are applicable.

Referring to FIG. 12(a), an example of RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

In operation 1301 according to various embodiments, the initiating device may transmit an RTT measurement request, and the responding device may receive the RTT measurement request.

In operation 1303 according to various embodiments, the initiating device may transmit an RTT measurement signal at t0 and the responding device may acquire a ToA measurement t1.

In operation 1305 according to various embodiments, the responding device may transmit an RTT measurement signal at t2 and the initiating device may acquire a ToA measurement t3.

In operation 1307 according to various embodiments, the responding device may transmit information about [t2-t1], and the initiating device may receive the information and calculate an RTT by Equation 6. The information may be transmitted and received based on a separate signal or in the RTT measurement signal of operation 1305.

[Equation 6]

$$\mathrm{RTT} = t_3 - t_0 - [t_2 - t_1]$$

Referring to FIG. 12(b), an RTT may correspond to a double-range measurement between two devices. Positioning estimation may be performed from the corresponding information, and multilateration may be used for the positioning estimation, $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

## 2.7. Sounding Procedure

In a wireless communication system to which various embodiments are applicable, an SRS for positioning may be used.

An SRS-Config information element (IE) may be used to configure SRS transmission. (A list of) SRS resources and/or (a list of) SRS resource sets may be defined, and each resource set may be defined as a set of SRS resources.

The *SRS-Config* IE may include configuration information on an SRS (for other purposes) and configuration information on an SRS for positioning separately. For example, configuration information on an SRS resource set for the SRS (for other purposes) (e.g., *SRS-ResourceSet*) and configuration information on an SRS resource set for the SRS for positioning (e.g., *SRS-PosResourceSet*) may be included separately. In addition, configuration information on an SRS resource for the SRS (for other purposes) (e.g., *SRS-ResourceSet*) and configuration information on an SRS resource for the SRS for positioning (e.g., *SRS-PosResource*) may be included separately.

An SRS resource set for positioning may include one or more SRS resources for positioning. Configuration information on the SRS resource set for positioning may include: information on an identifier (ID) that is assigned/allocated/related to the SRS resource set for positioning; and information on an ID that is assigned/allocated/related to each of the one or more SRS resources for positioning. For example, configuration information on an SRS resource for positioning may include an ID assigned/allocated/related to a UL resource. In addition, each SRS resource/SRS resource set for positioning may be identified based on each ID assigned/allocated/related thereto.

The SRS may be configured periodically/semi-persistently/aperiodically.

An aperiodic SRS may be triggered by DCI. The DCI may include an SRS request field.

Table 7 shows an example of SRS request field.

[Table 7]

| Value of SRS request field | Triggered aperiodic SRS resource set(s) for DCI format 0_1, 0_2, 1_1, 1_2, and 2_3 configured with higher layer parameter srs-TPC-PDCCH-*Group* set to 'typeB' | Triggered aperiodic SRS resource set(s) for DCI format 2_3 configured with higher layer parameter *srs-TPC-PDCCH-Group* set to 'typeA' |
|---|---|---|
| 00 | No aperiodic SRS resource set triggered | No aperiodic SRS resource set triggered |
| 01 | SRS resource set(s) configured by *SRS-ResourceSet* with higher layer parameter *aperiodicSRS-Resource Trigger* set to 1 or an entry in aperiodicSRS-*ResourceTriggerList* set to 1<br>SRS resource set(s) configured by *SRS-PosResourceSet* with an entry in aperiodicSRS-*Resource TriggerList* set to 1 when triggered by DCI formats 0_1, 0_2, 1_1, and 1_2 | SRS resource set(s) configured with higher layer parameter usage in SRS-*ResourceSet* set to 'antennaSwitching' and *resourceType* in SRS-*ResourceSet* set to 'aperiodic' for a 1st set of serving cells configured by higher layers |
| to | SRS resource set(s) configured by *SRS-ResourceSet* with higher layer parameter aperiodicSRS-*ResourceTrigger* set to 2 or an entry in *aperiodicSRS-Resource TriggerList* set to 2<br>SRS resource set(s) configured by *SRS-PosResourceSet* with an entry in *aperiodicSRS-ResourceTriggerList* set to 2 when triggered by DCI formats 0_1, 0_2, 1_1, and 1_2 | SRS resource set(s) configured with higher layer parameter *usage* in *SRS-ResourceSet* set to 'antennaSwitching' and resourceType in *SRS-ResourceSet* set to 'aperiodic' for a 2nd set of serving cells configured by higher layers |
| 11 | SRS resource set(s) configured by *SRS-ResourceSet* with higher layer parameter *aperiodicSRS-ResourceTrigger* set to 3 or an entry in *aperiodicSRS-Resource TnggerList* set to 3<br>SRS resource set(s) configured by *SRS-PosResourceSet* with an entry in *aperiodicSRS-ResourceTriggerList* set to 3 when triggered by DCI formats 0_1, 0_2, 1_1, and 1 2 | SRS resource set(s) configured with higher layer parameter usage in *SRS-ResourceSet* set to 'antennaSwitching' and *resourceType* in *SRS-ResourceSet* set to 'aperiodic' for a 3rd set of serving cells configured by higher layers |

In Table 7 srs-TPC-PDCCH-Group is a parameter for setting the triggering type for SRS transmission to type A or type B, aperiodicSRS-ResourceTriggerList is a parameter for configuring an additional list of DCI code points where the UE needs to transmit the SRS according to the SRS resource set configuration, aperiodicSRS-ResourceTrigger is a parameter for configuring a DCI code point where the SRS needs to be transmitted according to the SRS resource set configuration, and resourceType is a parameter for configuring (periodic/semi-static/aperiodic) time domain behavior of the SRS resource configuration.

### 3. Various Embodiments

A detailed description will be given of various embodiments based on the above technical ideas. The afore-described contents of Section 1 and Section 2 are applicable to various embodiments described below. For example, operations, functions, terminologies, and so on which are not defined in various embodiments may be performed and described based on Section 1 and Section 2.

Symbols/abbreviations/terms used in the description of various embodiments may be defined as follows.

- A/B/C: A and/or B and/or C
- CSI-RS: channel state information reference signal

- LMF: location management function
- PRS: positioning reference signal
- RS: reference signal
- RSRP: reference signal received power
- RSRQ: reference signal received quality
- RSTD: reference signal time difference/relative signal time difference
- SRS: sounding reference signal. In the description of various embodiments, the SRS may be an SRS for positioning and/or a multi-input multi-output (MIMO) SRS used for channel estimation/beam management.
- SLIV: Starting and Length Indicator Value (the SLIV is a field that indicates the starting symbol index and the number of symbols in a slot for a PDSCH and/or PUSCH, and the SLIV may be carried on a PDCCH scheduling the corresponding PDSCH and/or PUSCH.)
- TRP: transmission and reception point (TP: transmission point)
- UTDOA (UTDoA): uplink time difference of arrival

In the description of various embodiments, the term "BS" may be understood as an umbrella term including a remote radio head (RRH), an eNB, a NB, a TP, a reception point (RP), a relay, etc.

In the description of various embodiments of the present disclosure, when it is said that something is more than/more than or equal to A, it may be interpreted to mean that the thing is more than or equal to/more than A.

In the description of various embodiments of the present disclosure, when it is said that something is less than/less than or equal to B, it may be interpreted to mean that the thing is less than or equal to/less than B.

In various embodiments, when information on a PRS used to estimate the location of the UE is indicated over a group common PDCCH, it may be related to the operations of the network and/or UE. DCI format 2_0 described above with reference to FIG. 5 may be an example of DCI transmitted over a group-common PDCCH. However, this is merely an example, and the various embodiments are not limited thereto.

In various embodiments, when information on an SRS used to estimate the location of the UE is indicated over a group-common PDCCH, it may be related to the operations of the network and/or UE.

Various embodiments may relate to methods for the UE to request PRS resources to the network over a PUCCH.

Various embodiments may relate to methods for the UE to request SRS resources to the network over a PUCCH.

The operations of the UE described in various embodiments may be configured/indicated by the BS/location server/network or performed autonomously by the UE unless specifically stated otherwise.

The operations of the BS described in various embodiments may be configured/indicated by the location server or performed autonomously by the BS unless specifically stated otherwise.

The operations of the location server described in various embodiments may be configured/indicated by the BS or autonomously performed by the location server unless specifically stated otherwise.

The positioning SRS described in various embodiments may be replaced with a MIMO SRS unless specifically stated otherwise.

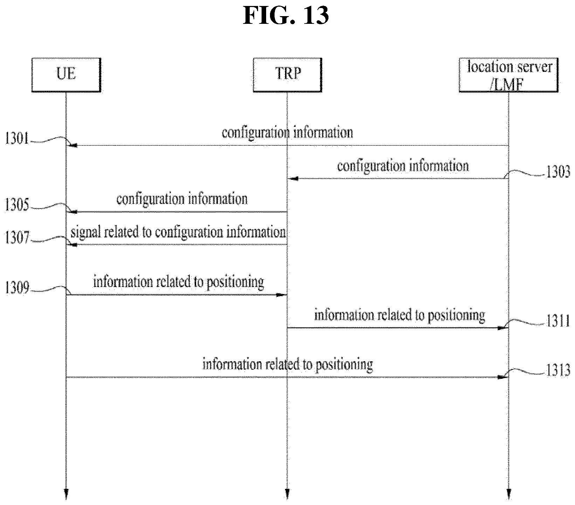

FIG. 13 is a simplified diagram illustrating an operating method of a UE, a TRP, a location server, and/or an LMF according to various embodiments.

Referring to FIG. 13, in operation 1301 according to various embodiments, the location server and/or the LMF may transmit configuration information to the UE, and the UE may receive the configuration information.

In operation 1303 according to various embodiments, the location server and/or the LMF may transmit reference configuration information to the TRP, and the TRP may receive the reference configuration information. In operation 1305 according to various embodiments, the TRP may transmit the reference configuration information to the UE, and the UE may receive the reference configuration information. In this case, operation 1301 according to various embodiments may be omitted.

In contrast, operations 1303 and 1305 according to various embodiments may be omitted. In this case, operation 1301 according to various embodiments may be performed.

That is, operation 1301 according to various embodiments, and operations 1303 and 1305 according to various embodiments may be selectively performed.

In operation 1307 according to various embodiments, the TRP may transmit a signal related to the configuration information, and the UE may receive the signal related to the configuration information. For example, the signal related to the configuration information may be a signal for positioning of the UE.

In operation 1309 according to various embodiments, the UE may transmit a signal related to positioning to the TRP, and the TRP may receive the signal related to positioning. In operation 1311 according to various embodiments, the TRP may transmit the signal related to positioning to the location server and/or the LMF, and the location server and/or the LMF may receive the signal related to positioning.

In operation 1313 according to various embodiments, the UE may transmit the signal related to positioning to the location server and/or the LMF, and the location server and/or the LMF may receive the signal related to positioning.

In this case, operations 1309 and 1311 according to various embodiments may be omitted.

In contrast, operation 1313 according to various embodiments may be omitted. In this case, operations 1309 and 1311 according to various embodiments may be performed.

That is, operations 1309 and 1311 according to various embodiments, and operation 1313 according to various embodiments may be selectively performed.

According to various embodiments, the signal related to positioning may be obtained based on the configuration information and/or the signal related to the configuration information.

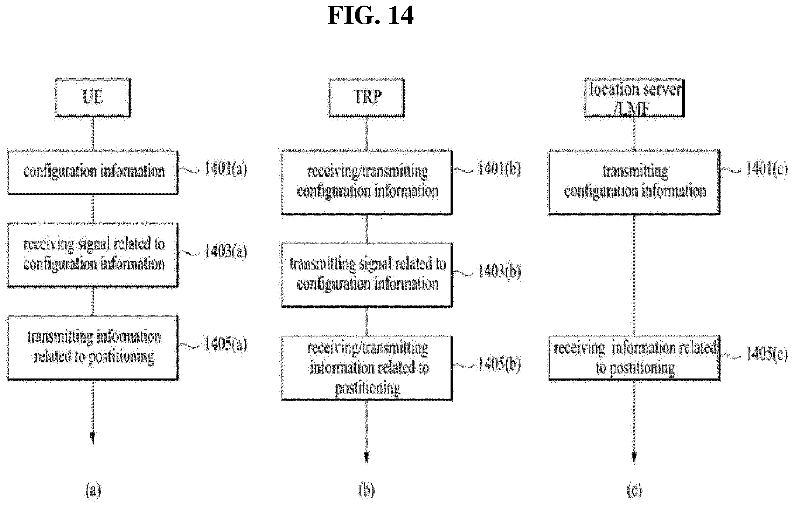

FIG. 14 is a simplified diagram illustrating an operating method of a UE, a TRP, a location server, and/or an LMF according to various embodiments.

Referring to FIG. 14, in operation 1401(a) according to various embodiments, the UE may receive configuration information.

In operation 1403(a) according to various embodiments, the UE may receive a signal related to the configuration information.

In operation 1405(a) according to various embodiments, the UE may transmit information related to positioning.

Referring to FIG. 14, in operation 1401(b) according to various embodiments, the TRP may receive configuration information from the location server and/or the LMF and transmit the configuration information to the UE.

In operation 1403(b) according to various embodiments, the TRP may transmit a signal related to the configuration information.

In operation 1405(b) according to various embodiments, the TRP may receive information related to positioning and transmit the information related to positioning to the location server and/or the LMF.

Referring to FIG. 14, in operation 1401(c) according to various embodiments, the location server and/or the LMF may transmit configuration information.

In operation 1405(c) according to various embodiments, the location server and/or the LMF may receive information related to positioning.

For example, the above-described configuration information may be understood as relating to reference configuration (information) or one or more pieces of information that the location server, the LMF, and/or the TRP transmits to/configures for the UE and/or may be understood as the reference configuration (information) or one or more pieces of information that the location server, the LMF, and/or the TRP transmits to/configures for the UE, in a description of various embodiments below.

For example, the above signal related to positioning may be understood as a signal related to one or more pieces of information that the UE reports and/or a signal including one or more pieces of information that the UE reports, in a description of various embodiments below.

For example, in a description of various embodiments below, the BS, the gNB, and the cell may be replaced with the TRP, the TP, or any device serving equally as the TRP or the TP.

For example, in a description of various embodiments below, the location server may be replaced with the LMF and any device serving equally as the LMF.

More detailed operations, functions, terms, etc. in operation methods according to various embodiments may be performed and described based on various embodiments described later. The operation methods according to various embodiments are exemplary and one or more operations in the above-described operation methods may be omitted according to detailed content of each embodiment.

Hereinafter, various embodiments will be described in detail. It may be understood by those of ordinary skill in the art that the various embodiments described below may be combined in whole or in part to implement other embodiments unless mutually exclusive.

**Group-Common PDCCH AP PRS and/or On-Demand PRS**

According to various embodiments, it may be considered that the network responds to an on-demand PRS/SRS request from the UE, as an example of introduction of an aperiodic (AP) PRS/SRS for UE positioning.

DCI-triggering time instance

According to various embodiments, two methods may be considered to drive AP PRS triggering. According to various embodiments, a time point at which a PRS is triggered by DCI may be proposed.

In the following description of various embodiments, a PRS triggered by DCI may be referred to as a DCI-triggered PRS and/or a PRS activated by DCI.

In the following description of various embodiments, a PRS may be replaced with an SRS unless specifically stated otherwise. For example, resources and/or resource sets for a PRS configured/indicated by DCI may be replaced with resources and/or resource sets for an SRS configured/indicated by DCI.

**Method #1**

According to various embodiments, the network may indicate/configure to the UE a time offset for an AP PRS transmission time based on a DCI reception time.

For example, a specific PRS resource set and/or PRS resources transmitted by a specific TRP(s) (using a specific frequency layer) may be triggered by DCI.

For example, a transmission time at which a PRS resource set and/or PRS resources are triggered by DCI may be configured/indicated to the UE through RRC and/or LPP signaling.

For example, an AP PRS resource set and/or PRS resources may be aperiodically triggered in a higher layer signal with respect to a predetermined AP PRS triggering time offset (e.g., slot level offset and/or symbol level offset).

**Method #2**

According to various embodiments, a PRS transmission occasion (and/or PRS transmission period) closest to the DCI reception time may be considered as the AP PRS transmission time, instead of configuring/indicating a separate time offset for the DCI-triggered PRS.

For example, a PRS resource set and/or PRS resources may be configured to be transmitted periodically/semi-statically. For example, when a specific PRS resource set and/or PRS resources are triggered by DCI, the UE may consider the PRS transmission period/occasion closest to the DCI reception time as the AP PRS transmission time.

In Method #1 according to various embodiments, a separate AP PRS resource set and/or PRS resources (different from a periodic/legacy PRS resource set and/or PRS resources) may be required to use the AP PRS. In Method #2 according to various embodiments, the AP PRS may be driven/supported by a periodic PRS resource set and/or PRS resources.

In Method #1 and Method #2 according to various embodiments, one or more of the following PRS units may be triggered by DCI. The reason for this is that the UE needs to receive PRSs transmitted in at least three or more TRPs for UE positioning.

- A positioning frequency layer
- AP triggering of all TRP(s) included in a specific positioning frequency layer, PRS resource sets and/or PRS resources transmitted by all TRP(s)
- A group of TRP(s)
- A specific TRP
- Specific PRS resource set(s) of a TRP
- Specific PRS resource(s) within a PRS resource set transmitted from a TRP

**Proposal #1**

In Method # 1 and/or Method # 2 according to various embodiments, a PRS may be triggered by DCI based on a UE-specific PDCCH. Additionally/alternatively, a PRS may be triggered by a group-common (and/or UE-common) PDCCH. In the following description of various embodiments, the term group-common may be replaced with the term UE-common) PDCCH (GC-PDCCH).

According to various embodiments, when an AP PRS is driven by GC-DCI (i.e., GC-PDCCH-based DCI), the driving of the AP PRS based on the GC-DCI may change depending on whether the UE requests an on-demand PRS. In other words, the AP PRS operation based on the GC-DCI may vary depending on whether the on-demand PRS request operation is performed. Hereinafter, CASE A and CASE B will be described.

CASE A

According to various embodiments, when the network configures/indicates to the UE AP PRS triggering in GC-DCI after the UE performs the on-demand PRS request operation, the UE may receive a DL PRS according to the indication/configuration in the GC-DCI.

According to various embodiments, when the network configures/indicates to the UE AP PRS triggering in GC-DCI after the UE performs the on-demand PRS request operation, the UE may receive a DL PRS according to the indication/configuration in the GC-DCI. According to various embodiments, the UE may receive the AP PRS at a time when a specific PRS resource set and/or PRS resources indicated by the GC-DC are triggered/activated.

IN CASE A according to various embodiments, the time at which the UE receives the AP PRS may correspond to that described above in Method #1. According to various embodiments, the BS/network may transmit the same PRS at a specific time point to all UEs that have performed the on-demand PRS request operation. For example, the BS/network may aperiodically trigger a specific PRS resource set and/or PRS resources in consideration of the processing time of the UE performing the on-demand PRS request operation.

CASE B

According to various embodiments, when the UE is configured/indicated with AP PRS triggering from the network in GC-DCI (and/or UE-commonly) without performing the on-demand PRS request operation, the UE may operate as follows.

1) The UE may regard the AP PRS triggering based on the GC-DCI as a configuring/indication indicating that the UE needs to measure and/or report PRS resources and/or PRS resource sets indicated by the GC-DCI. According to various embodiments, upon receiving the GC-DCI, the UE may perform measurement on the closest PRS occasion (indicated by DCI), which is transmitted after the processing time for the GC-DCI.
2) The UE may regard the AP PRS triggering based on the GC-DCI as a configuring/indication indicating that the UE needs to measure a DL PRS for positioning.

In CASE B according to various embodiments, the time at which the UE receives the AP PRS may correspond to that described above in Method #2. According to various embodiments, upon receiving the GC-DCI, each UE may receive the PRS on the closest transmission occasion for a specific PRS resource set and/or PRS resources indicated for the AP PRS after the processing time of the DCI. For example, the AP PRS reception timing may be different for each UE.

According to various embodiments, it may be considered that an aperiodically triggered PRS is always predetermined as a periodic PRS. For example, specific time-frequency resources may be predetermined such that the PRS is transmitted periodically.

For example, in CASE A of Proposal #1, the network may transmit a PRS once more at a time triggered by DCI and indicated by a time offset for an AP-triggered UE (i.e., UE to receive an aperiodically triggered PRS), in addition to periodic PRS transmission. In addition, if the UE transmits the on-demand PRS request, the UE may consider to receive the aperiodically transmitted PRS.

Additionally/alternatively, for example, in CASE B of Proposal #2, even if the network additionally transmits an AP PRS at an AP PRS transmission time in addition to a predetermined periodic PRS, the UE may receive the AP PRS at the closest period/transmission time/occasion in which the predetermined periodic PRS is transmitted.

Hereinabove, various embodiments have been described with a focus on AP triggering of a specific PRS resource set and/or PRS resources. However, levels/units on which AP triggering is to be performed may include a specific TRP group and/or specific TRPs as well as a PRS resource set and/or PRS resources. Additionally/alternatively, one or more of the following levels/units on which AP triggering is performed may be understood as the PRS unit triggered by DCI according to various embodiments.

Various embodiments have been described with a focus on the introduction of an AP PRS based on a GC-PDCCH. However, the various embodiments are not limited to AP PRS triggering based on the GC-PDCCH. For example, the various embodiments may be applied to a UE-specific PDCCH and/or a UE-common PDCCH.

(Generalization of proposal to UE-specific DCI)

According to various embodiments, depending on whether the UE performs the on-demand PRS request operation, the UE may differently interpret the DCI-triggered AP PRS indicated by the network as follows.

A: According to various embodiments, when the UE is configured/indicated with AP PRS triggering from the network in DCI after performing the on-demand PRS request operation, the UE may receive the DCI and then receive a PRS resource set and/or PRS resources that are aperiodically transmitted after a specific time offset (e.g., slot offset and/or symbol offset).
B: According to various embodiments, when the UE is configured/indicated with AP PRS triggering from the network in DCI without performing the on-demand PRS request operation, the UE may perform PRS measurement at a point in time closest to a DCI reception time, where the point in time is a time at which a PRS resource set and/or PRS resources are periodically/semi-statically transmitted.

In case A according to various embodiments, the PRS resource set and/or PRS resources may be a PRS resource set and/or PRS resources configured exclusively for the AP purpose.

In case B according to various embodiments, the PRS resource set and/or PRS resources may be a periodic PRS resource set and/or PRS resources previously configured for the UE by the network (via a positioning system information block (PoS-SIB), etc.). Case B according to various embodiments may be considered as an operation for the network to configure/instruct the UE to perform measurement on specific/all PRS resource sets and/or PRS resources if the UE is not performing measurement on the specific/all PRS resource sets and/or PRS resources.

Additionally, the following may also be proposed in various embodiments. The proposals below are not independent of Proposal #1, and the proposals may be combined to form other various embodiments as long as they do not contradict each other.

**Proposal #2**

According to various embodiments, the network may provide specific information to a specific UE and/or a member of a specific UE group in DCI over a GC-PDCCH. Alternatively, the network may instruct the UE to perform a specific operation in the DCI over the GC-PDCCH.

For example, the GC-PDCCH may be used for two purposes: 1) AP PRS triggering to the specific UE belonging to the group; and 2) a network's response to the on-demand PRS request from the UE. In various embodiments, the operations of the network and UE will be described in relation to the GC-PDCCH.

According to various embodiments, the specific UE/UE group may be configured/instructed by the network to monitor/receive the GC-PDCCH transmitted for the above two purposes.

According to various embodiments, which of the following two purposes/uses of the GC-PDCCH: {AP PRS transmission triggering, on-demand PRS response} is provided/indicated to the UE may be identified by a specific bit field (and/or a specific radio network temporary identifier (RNTI) used for PDCCH scrambling) in the corresponding PDCCH.

For example, when the UE performs the on-demand PRS request operation, the UE may check whether the GC-PDCCH is masked with a specific RNTI upon receiving the GC-PDCCH. By doing so, the UE may determine whether the network responds to the on-demand PRS request operations performed by the UE.

When the UE corresponds/belongs to the specific UE/UE group and sends the on-demand PRS request to the location server/BS/gNB, if the UE receives the GC-PDCCH (and/or, when the UE performs the on-demand PRS request operation and receives the GC-PDCCH), the UE may operate as follows.

According to various embodiments, the UE may receive/measure a PRS of which transmission is triggered by the corresponding GC-PDCCH, regardless of whether the purpose of the GC-PDCCH is the AP PRS transmission triggering or on-demand PRS response. In other words, the UE may receive/measure the PRS triggered by the GC-PDCCH regardless of the purpose of the GC-PDCCH.

According to various embodiments, when the UE corresponds/belongs to the specific UE/UE group and does not send the on-demand PRS request to the BS/gNB, if the UE receives the GC-PDCCH (and/or, when the UE does not perform the on-demand PRS request operation and receives the GC-PDCCH), the UE may operate as follows.

According to various embodiments, if the purpose of the corresponding GC-PDCCH is indicated as the AP PRS transmission triggering, the UE may receive/measure a PRS of which transmission is triggered by the corresponding GC-PDCCH.

According to various embodiments, if the purpose of the corresponding GC-PDCCH is indicated as the on-demand PRS response, the UE may ignore the corresponding GC-PDCCH (PRS transmission triggered thereby).

Proposal #3 (GC-PDCCH + multiple UE(s) scheduling for positioning measurement)

According to various embodiments, the network may allocate UL resources (e.g., time/frequency resources for a PUSCH) for reporting positioning measurements (e.g., time measurements obtained from a PRS/SRS (e.g., RSTD, UE RX-TX time difference, RSRP, etc.), RS resource information (e.g., PRS resource set ID(s), PRS resource ID(s), SRS resource set ID(s), SRS resource ID(s)), and/or RS related information (e.g., a cell in which the PRS is transmitted, TRP information (e.g., TRP ID(s)), positioning frequency layer ID(s)) to a specific UE and/or one or more UEs belonging to a specific UE group over a single GC-PDCCH.

According to various embodiments, the UE may be configured/instructed (by the network) to monitor/receive the GC-PDCCH transmitted to the specific UE group for scheduling the UL resources for reporting the positioning measurements.

According to various embodiments, indices for informing each UE belonging to the specific UE group as the UE number in the corresponding group may be preconfigured. For example, the BS/network may inform each UE of the UE group that the index of the corresponding UE is X (where X is a natural number/an integer greater than or equal to 0).

According to various embodiments, a plurality of pieces of UL grant information may be included and transmitted over a PDSCH scheduled based on the GC-PDCCH (for example, a plurality of pieces of UL grant/scheduling information may be jointly encoded).

For example, the plurality of pieces of UL grant information may be information on PUSCH resources to be used by the specific UE and/or each UE of the specific UE group.

For example, each piece of UL grant information may include some or all of {time-domain resources (e.g., start and length indicator value (SLIV), K2, etc.), frequency-domain resources (e.g., physical resource block (PRB), bandwidth part (BWP), etc.), modulation and coding scheme (MCS) information}.

(DCI overhead-aware)

According to various embodiments, when K (> 0) UEs receive scheduling information over a GC-PDCCH, the UEs may use the same frequency resources (RBs). However, K time resources may be configured/indicated separately for each UE.

For example, information on one frequency resource and K SLIVs may be configured/indicated. Additionally/alternatively, K UEs may use the same time resources (e.g., slot(s), symbol(s), etc.), but K frequency resources may be configured/indicated separately for each UE. For example, information on one frequency resource (frequency domain resource allocation (FDRA)) and K SLIVs may be configured/indicated over the GC-PDCCH.

According to various embodiments, when UEs (in a UE group) receive a GC-PDCCH and a PDSCH, each of the UEs may obtain UL grant information corresponding to its own UE index in the corresponding PDSCH. For example, in the case of a UE whose UE index is X, the UE may recognize X-th UL grant information as UL grant information for the UE. In addition, methods based on modulo operations may also be considered. For example, in the case of a UE whose UE index is X (where X is a natural number), the UE may recognize K-th UL grant information as information for the UE (K = mod (X, N), where K and N are natural numbers and N may be configured/indicated by the network to the UE).

As described above, the AP PRS may be associated with the on-demand PRS request operation of the UE and/or the on-demand SRS (for positioning) request operation of the UE.

According to various embodiments, methods for the UE to send an on-demand RS request to the network may be provided.

According to various embodiments, the following three states may be considered based on on-demand RS types requested by the UE.

> 1) On-demand PRS request
> 2) On-demand SRS request
> 3) On-demand PRS + SRS request (joint request)

According to various embodiments, the UE may request a specific RS type (DL PRS/UL SRS) for UE positioning with a total of one-bit or two-bit UCI in a specific PUCCH format.

According to various embodiments, the UE may send RS requests for positioning to the network with a one-bit UCI payload as follows.

> 1) State 0: on-demand DL PRS Request
> 2) State 1: on-demand SRS Request

According to various embodiments, if the one bit is 0 (or 1), the one bit may be mapped to a PRS request. If the one bit is 1 (or 0), the one bit may be mapped to an SRS request.

According to various embodiments, the following may be considered as another example of the one-bit UCI payload,

> 1) State 0: on-demand DL PRS request
> 2) State 1: on-demand DL PRS request + on-demand resource request for reporting on positioning measurements

According to various embodiments, if the one bit is 0 (or 1), the one bit may be mapped to a PRS request. If the one bit is 1 (or 0), the one bit may be mapped to a PRS request and a resource request for reporting positioning measurements.

According to various embodiments, the UE may send a DL PRS request using one bit. Alternatively, the UE may send a resource request for reporting positioning measurements together with a DL PRS request using one bit.

According to various embodiments, the UE may send RS requests for positioning to the network using a two-bit UCI payload as follows.

> 1) State 00: on-demand PRS request
> 2) State 01: on-demand SRS request
> 3) State 10: on-demand SRS + on-demand PRS (joint request)

4) State 11: none (Reserved) or on-demand reporting

According to various embodiments, if the two bits are 00, the two bits may be mapped to a PRS request. If the two bits are 01, the two bits may be mapped to an SRS request. If the two bits are 10, the two bits may be mapped to both the PRS request and SRS request. If the two bits are 11, the two bits may be preserved or mapped to on-demand reporting. These bit values are exemplary, and thus various embodiments are not limited thereto. As an example of the on-demand reporting, positioning measurement reporting may be considered.

**Proposal #3**

According to various embodiments, the UE may send an on-demand PRS/SRS request in UCI. According to various embodiments, the UE may transmit to the BS/network information obtained by jointly encoding the on-demand PRS/SRS request with at least one of HARQ ACK/NACK information or SR information.

- on-demand PRS request only
- on-demand SRS request only
- HARQ ACK/NACK + request of on-demand PRS
- HARQ ACK/NACK + request of on-demand SRS
- HARQ ACK/NACK + joint request of on-demand SRS + PRS
- Scheduling Request (SR) + request of on-demand PRS
- Scheduling Request (SR) + request of -on-demand SRS
- Scheduling Request (SR) + joint request of on-demand SRS + PRS

According to various embodiments, the UE may send a request for an on-demand PRS, SRS, or PRS+SRS (to the BS/location server) together with information on at least one of a HAQR ACK/NACK, SR, and CSI. According to various embodiments, the UE may transmit jointly encoded information to the BS by mapping the information to modulation symbol(s) and/or specific bit fields (bit states). Additionally/alternatively, the UE may transmit a sequence based on a specific cyclic shift value to transmit the jointly encoded information.

Hereinafter, it will be described that the UE sends an on-demand RS request for positioning with PUCCH format #0 and/or PUCCH format #1.

According to various embodiments, a method by which the UE transmits an on-demand PRS request and/or on-demand SRS request together with HARQ ACK/NACK information to the BS with PUCCH format #0 may be considered.

According to various embodiments, a length-12 Zadoff-Chu (ZC) sequence may be used for PUCCH format #0. Since an orthogonal sequence may be generated by applying cyclic shifting to a unique ZC sequence with a specific root, the UE may transmit information that the UE desires to transmit by selecting a cyclic-shifted sequence based on a specific cyclic shift value (predetermined between the UE and BS).

**HARQ ACK/NACK + On-Demand PRS/SRS Request Operation**

According to various embodiments, the UE may be instructed/configured to transmit a HARQ ACK/NACK and an on-demand PRS/SRS request with one or more of specific cyclic shift values. According to various embodiments, it may be considered to obtain a final cyclic shift value by adding a relative cyclic shift value to an initial cyclic shift value.

For example, the network may provide the UE with 2 ($m_0$) as the initial cyclic shift value and then configure/indicate to the UE "0, 3, 6, and 9" ( ) as cyclic shift values relative to the initial cyclic shift value. Each of the variables: $m_0$ and $m_{cs}$ may be defined in specifications such as TS 38.213.

For example, each cyclic shift value may be obtained by jointly encoding HARQ ACK/NACK information and on-demand PRS/SRS request information. The HARQ ACK/NACK may be mapped to cyclic shift indices as shown in Table 8. For example, the UE may request the PRS/SRS to the network together with each HARQ ACK/NACK based on cyclic shifting. In Table 8, A and N denote an ACK and a NACK, respectively.

[Table 8]

| HARQ ACK/NACK | (N,N) | (N,A) | (A,A) | (A,N) |
|---|---|---|---|---|
| Sequence cyclic shift | 2 | 5 | 8 | 11 |

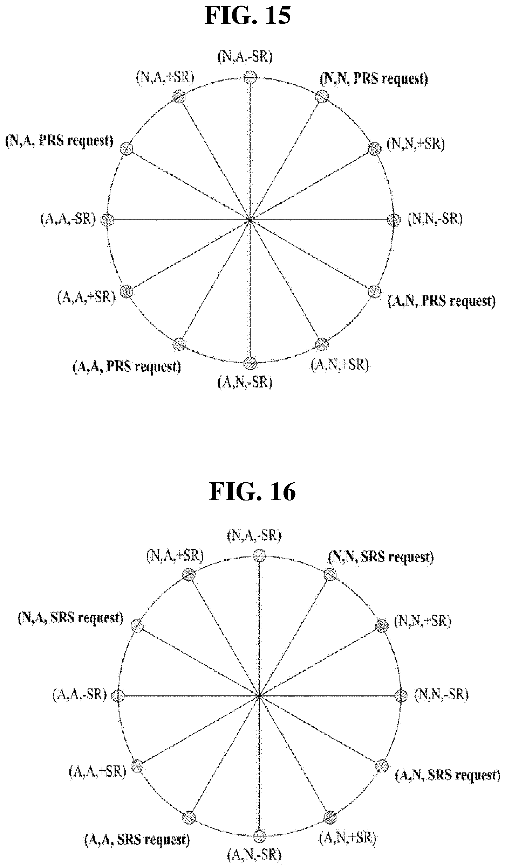

FIG. 15 is a diagram illustrating an example of PRS request according to various embodiments.

FIG. 16 is a diagram illustrating an example of SRS request according to various embodiments.

Referring to FIGS. 15 and 16, it is confirmed that a PRS/SRS request, HARQ ACK/NACK information, and SR information are transmitted, being distinguished from states indicating the conventional SR and HARQ ACK/NACK. In FIGS. 15 and 16, A denotes an ACK, N denotes a NACK, +SR denotes that an SR is included, and -SR denotes that no SR is included. Each case corresponds to a different cyclic shift value, and each case may be identified by the cyclic shift value.

In FIG. 15, the mapping relationship may be defined as follows, depending cyclic shift values.

cyclic shift=0: (N, A, -SR)
cyclic shift=1: (N, N, PRS request)
cyclic shift=2: (N, N, +SR)
cyclic shift=3: (N, N, -SR)
cyclic shift=4: (A, N, PRS request)
cyclic shift=5: (A, N, +SR)
cyclic shift=6: (A, N, -SR)
cyclic shift=7: (A, A, PRS request)
cyclic shift=8: (A, A, +SR)
cyclic shift=9: (A, A, -SR)
cyclic shift=10: (N, A, PRS request)
cyclic shift=11: (N, A, +SR)

In FIG. 16, the mapping relationship may be defined as follows, depending cyclic shift values.

cyclic shift=0: (N, A, -SR)
cyclic shift=1: (N, N, SRS request)
cyclic shift=2: (N, N, +SR)
cyclic shift=3: (N, N, -SR)
cyclic shift=4: (A, N, SRS request)
cyclic shift=5: (A, N, +SR)
cyclic shift=6: (A, N, -SR)
cyclic shift=7: (A, A, SRS request)
cyclic shift=8: (A, A, +SR)
cyclic shift=9: (A, A, -SR)
cyclic shift=10: (N, A, SRS request)
cyclic shift=11: (N, A, +SR)

According to various embodiments, the on-demand PRS/SRS request may be transmitted separately with PUCCH format #0 (on-demand PRS/SRS request only), rather than being transmitted together with HARQ ACK/NACK information.

According to various embodiments, the UE may be instructed/configured to perform the on-demand PRS/SRS request operation using one or more of specific cyclic shift values.

According to various embodiments, the UE may be configured/instructed (by the network) to perform the following operations: on-demand PRS request, on-demand SRS request, and on-demand PRS + SRS request by transmitting a cyclic shifted sequence based on a specific cyclic shift value.

For example, the network may provide the UE with "2" ($m_0$) as the initial cyclic shift value and then configure/indicate to the UE "0, 3, 6, and 9" ($m_{CS}$) as cyclic shift values relative to the initial cyclic shift value (that is, finial cyclic shift values are 2, 5, 8, and 11). These cyclic shift values may be mapped to the following UE operations.

cyclic shift=2: on-demand SRS request
Operations of transmitting SRS resources and/or SRS resource sets for positioning and/or requesting to configure resources for the SRS
cyclic shift=5: on-demand PRS request
Operation of sending a request for a DL PRS reception/resource configuration to the network (the DL PRS may mean a PRS resource set, PRS resources, and/or all or some PRSs transmitted by a specific TRP or TRP group.)
cyclic shift=8: on-demand PRS + SRS request (joint request)
cyclic shift=11: none/reserved

According to various embodiments, none/reserved states/resources may be used for the on-demand reporting request operation of the UE.

The above information may be summarized as shown in Table 9.

[Table 9]

| Sequence cyclic shift | 2 | 5 | 8 | 11 |
|---|---|---|---|---|
| On-demand request | SRS | PRS | SRS + PRS | None/reserved |

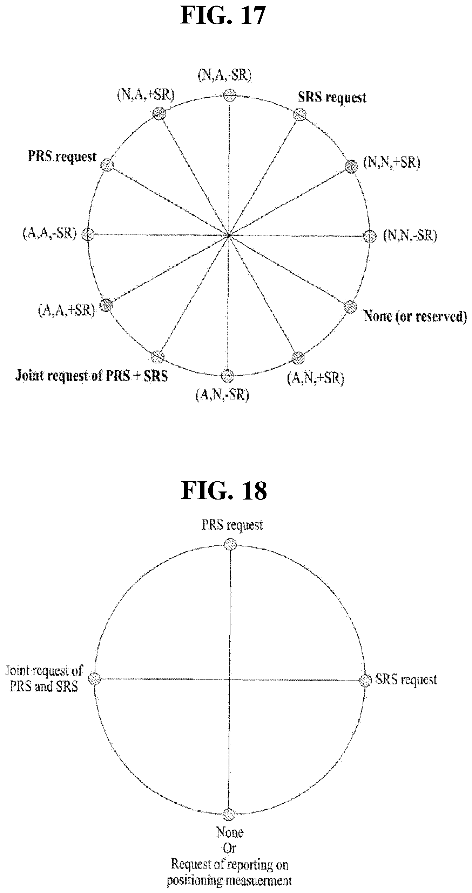

FIG. 17 is a diagram illustrating an example of PRS/SRS request according to various embodiments.

Referring to FIG. 17, the on-demand PRS/SRS may be distinguished from HARQ ACK/NACK + SR PUCCH resources by cyclic shift values. In FIG. 17, A denotes an ACK, N denotes a NACK, +SR denotes that an SR is included, and -SR denotes that no SR is included. Each case corresponds to a different cyclic shift value, and each case may be identified by the cyclic shift value.

In FIG. 17, the mapping relationship may be defined as follows, depending cyclic shift values.

cyclic shift=0: (N, A, -SR)
cyclic shift=1: SRS request
cyclic shift=2: (N, N, +SR)
cyclic shift=3: (N, N, -SR)
cyclic shift=4: none or reserved
cyclic shift=5: (A, N, +SR)
cyclic shift=6: (A, N, -SR)
cyclic shift=7: joint request for PRS and SRS
cyclic shift=8: (A, A, +SR)
cyclic shift=9: (A, A, -SR)
cyclic shift=10: PRS request
cyclic shift=11: (N, A, +SR)

The following operations: on-demand PRS request, on-demand SRS request, and on-demand PRS and SRS request depending on cyclic shift values according to various embodiments may be merely examples of the proposal of the present disclosure. According to various embodiments, a requested RS may change depending on cyclic shift values. For example, in the operation of on-demand PRS/SRS request only, if the cyclic shift value is 2, the PRS may be requested instead of the SRS.

In the description of various embodiments, it is assumed that for PUCCH format #0, a ZC sequence with a specific root value is cyclically shifted and used. However, it may be also considered that the UE uses ZC sequence(s) generated with a specific root value to report SR and/or HARQ ACK/NACK information and uses a dedicated root value to independently generate a sequence for the on-demand RS request for positioning.

[Independent/separate root index]

According to various embodiments, it may be considered that an independent/additional root index is allocated by PUCCH format #0 to allow the UE to perform the on-demand PRS/SRS request operation.

According to various embodiments, the network may configure/indicate to the UE multiple root indices for PUCCH format #0 through higher layer signaling.

According to various embodiments, the network may configure/indicate to the UE a specific root index to be used when the UE transmits the on-demand PRS request, on-demand SRS request, and/or on-demand PRS+SRS request in PUCCH format #0. According to various embodiments, it may be configured to be used limitedly only for the on-demand PRS/SRS.

For example, assuming that the root index of a ZC sequence used for transmission of SR and/or HARQ ACK/NACK information is $u_1$, a sequence for the on-demand RS request may be created by using $u_2$ that is different from the root index. According to various embodiments, a cyclic shift value used for the root index $u_1$ may be reused.

For example, the UE may request the on-demand PRS and/or on-demand SRS by transmitting a cyclic shifted sequence (e.g., PUCCH format # 0) using one or more of the following cyclic shift indices: 0, 3, 6, and 9.

Table 10 may be considered as an example thereof.

[Table 10]

| Sequence cyclic shift | 0 | 3 | 6 | 9 |
|---|---|---|---|---|
| On-demand request | SRS | PRS | SRS + PRS | None/reserved (Or on-demand reporting request) |

FIG. 18 is a diagram illustrating an example of PRS/SRS request according to various embodiments.

Referring to FIG. 18, different cyclic shifts and/or different phase shifts according to each cyclic shift may be configured/indicated.

In FIG. 18, the mapping relationship may be defined as follows, depending cyclic shift values.

cyclic shift=0: PRS request
cyclic shift=3: SRS request
cyclic shift=6: none or reserved
cyclic shift=9: joint request for PRS and SRS
[on-demand reporting]

According to various embodiments, the UE may report to the BS/network that the UE has information (e.g., positioning measurements) to report by transmitting a sequence shifted with a specific cyclic shift value (for example, PUCCH format #0 may be used).

In the above-described example, if a root index different from the root index, which is used when the UE transmits SR and/or HARQ ACK/NACK information, is used, the UE may use one of the four cyclic shift values (e.g., 0, 3, 6, and 9) described above to send a request for reporting positioning measurements. Such a UE operation may be interpreted as the on-demand reporting operation.

According to various embodiments, if the same root index as the root index used when the UE transmits SR and/or HARQ ACK/NACK information is used, a sequence cyclic shift index of 11 may be used. For example, the UE may transmit to the network a sequence obtained by applying the sequence cyclic shift index of 11. By doing so, the UE may inform the network that the UE has positioning measurements to report to the network and also send a request for resources (time/frequency resources) (e.g., PUSCH resources) for reporting the measurements.

It is difficult for the network to track a change in the position of the UE due to the mobility of the UE. Thus, the UE may track/estimate/detect its position change. If the position change exceeds a specific threshold, the UE needs to report the position change to the network. In particular, this UE operation may be required in a system that ensures a high level of positioning accuracy. According to various embodiments, these issues may be addressed.

It is assumed in the above-described embodiments that PUCCH format #0 is used, but other formats may also be used as well as PUCCH format #0.

According to various embodiments, the UE may send an RS request for positioning to the network using a two-bit UCI payload as follows.

1) State 00: on-demand PRS request
2) State 01: on-demand SRS request
3) State 10: on-demand SRS + on-demand PRS (joint request)
4) State 11: none (Reserved) or on-demand reporting

According to various embodiments, if the two bits are 00, the two bits may be mapped to a PRS request. If the two bits are 01, the two bits may be mapped to an SRS request. If the two bits are 10, the two bits may be mapped to both the PRS request and SRS request. If the two bits are 11, the two bits may be preserved or mapped to on-demand reporting. These bit values are exemplary, and thus various embodiments are not limited thereto. As an example of the on-demand reporting, positioning measurement reporting may be considered.

According to various embodiments, a method of allocating PUCCH resources for transmitting a PUCCH-based on-demand PRS request signal and a configuration method thereof may be provided in addition to the on-demand PRS/SRS request operation of the UE described above.

**Proposal #4: PUCCH Resource Allocation/Configuration Method for On-Demand PRS Request Signal Transmission Based on PUCCH**

According to various embodiments, the network may allocate independent PUCCH resources to the UE for the following operations/purposes: on-demand PRS request and on-demand SRS request. According to various embodiments, the network may configure/allocate separate/independent PUCCH resources to the UE to allow the UE to simultaneously perform the on-demand PRS request and on-demand SRS request.

For example, the network may configure/allocate PUCCH resource #1 for the on-demand PRS request and configure/allocate PUCCH resource #2 for the on-demand SRS request. For example, when the UE performs the on-demand PRS request operation, the UE may transmit PUCCH resource #1 that is configured to the BS. For example, when the UE performs the on-demand SRS request operation, the UE may transmit PUCCH resource #2 that is configured to the BS. In this case, transmission of the configured PUCCH resource itself may be understood as transmission of a message.

For PUCCH format #0, the network may periodically configure one PUCCH resource corresponding to a specific combination of {PRB index, cyclic shift (CS) value} for the UE. For PUCCH format #1, the network may periodically configure one PUCCH resource corresponding to a specific combination of {PRB index, CS value, OCC index} for the UE. For example, the UE may be configured/instructed to use the PUCCH resource to send a request for the PRS and/or SRS (on-demand request) to the network.

Approach #1) - Resource transmission itself is on-demand RS request

According to various embodiments, if the on-demand PRS request is present in each period, the UE transmits a related PUCCH resource. If there is no PRS request, the UE may transmit no PUCCH. According to various embodiments, the UE may transmit a related PUCCH if the on-demand SRS request is present in each period. The UE may not transmit PUCCH resources if there is no SRS request.

According to various embodiments, the network may configure to the UE one PUCCH resource for each of the on-demand PRS request operation and on-demand SRS request operation.

For example, two PUCCH resources may have the same PRB index (or indices), but different CSs and/or OCCs may be configured. For example, the same frequency resources may be used for the two PUCCH resources, but different CSs and/or OCCs may be configured.

According to various embodiments, if different CSs and/or OCCs are used depending on the on-demand PRS request operation or on-demand SRS request operation of the UE even though the same PRB is used, the BS may recognize/identify the PRS/SRS request of the UE based on the CS and/or OCC used by the UE.

According to various embodiments, if the PRS request operation and SRS request operation are required simultaneously, one PUCCH resource may be configured for each of the three different request operations. For example, three PUCCH resources may have the same PRB index, but different CSs and/or OCCs may be configured.

According to various embodiments, the UE may transmit PUCCH resources configured for the above-described operations: on-demand PRS request, on-demand SRS request, and on-demand SRS+PRS request in each PUCCH resource configuration period. If there is no request, the UE may not transmit any PUCCH resources.

Approach #2) - Transmission of binary data such as binary phase-shift keying/quadrature phase shift keying (BPSK/QPSK)

According to various embodiments, in the case of PUCCH format 1, the network may configure only one specific PUCCH resource corresponding to a specific combination of {PRB index, CS value, OCC index} for the UE. Then, the network may instruct the UE to transmit one of the above two requests (PRS transmission request and SRS resource request) or one of the three requests (PRS transmission request, SRS resource request, and simultaneous PRS and SRS request), depending on modulation symbols (e.g., BPSK/QPSK symbols) carried on a UCI sequence in the corresponding PUCCH resource (and/or depending on bit field(s), bit state(s), etc.).

According to various embodiments, PUCCH resources may be configured independently depending on the purposes of PUCCH resource configurations. For example, PUCCH resource #1 may be configured for the on-demand PRS request, and PUCCH resource #2 may be configured for the HARQ ACK/NACK. According to various embodiments, the BS may interpret a bit field transmitted in PUCCH format #1 differently depending on PUCCH resource configurations, which depend on the purposes thereof, and/or UCI types (SR, HARQ, on-demand PRS/SRS, etc.). Accordingly, different information may be transmitted based on binary information/modulation symbols transmitted on a specific one PUCCH resource.

For example, a common single PUCCH resource, PUCCH resource #1 may be allocated to the UE for the PRS and SRS request.

For example, in the case of one bit, the one bit may be configured as follows.

Bit 0: PRS request (or SRS request)
Bit 1: SRS request (or PRS request)
For example, in the case of two bits, the two bits may be configured as follows.
State 00: on-demand PRS request

State 01: on-demand SRS request

State 10: on-demand SRS + on-demand PRS (joint request)

State 11: none (Reserved)

According to various embodiments, after BPSK/QPSK modulation, modulation symbols corresponding to the bit state/information may be mapped onto PUCCH resource #1 and then transmitted.

**Proposal #5: PUCCH resource Configuration for Transmission of On-Demand Reporting Signal Based on PUCCH**

According to various embodiments, the network may configure/allocate independent PUCCH resources for the on-demand reporting request operation/purpose (e.g., positioning-related information reporting request operation/purpose) o to the UE. According to various embodiments, the network may configure/instruct the UE to perform the on-demand PRS/SRS request operation and/or the on-demand reporting request operation on a specific single PUCCH resource. According to various embodiments, the PUCCH resource may be configured to be used by the UE periodically in the time domain. According to various embodiments, positioning-related information (positioning-relation information) may include information on a DL/UL positioning measurement, a cell/TRP transmitting the PRS, a frequency layer in which the PRS is transmitted, a measurement quality, and so on.

According to various embodiments, the UE may transmit the corresponding PUCCH resource if there is an on-demand reporting request in each period. The UE may not to transmit the PUCCH if there is no PRS request. According to various embodiments, when the UE transmits a specific PUCCH resource, it may be interpreted to mean that the UE performs the on-demand reporting request.

According to various embodiments, the network may configure to the UE one independent PUCCH resource for each of the on-demand PRS request operation, on-demand SRS request operation, and/or on-demand request of SRS and PRS operation and the on-demand reporting request operation.

For example, four PUCCH resources may have the same PRB index (or indices), but different CSs and/or OCCs may be configured. That is, the same frequency resources may be used for the four PUCCH resources, but different CSs and/or OCCs may be configured.

For example, a single PUCCH resource may be used to perform the on-demand PRS/SRS request operation and/or on-demand reporting operation.

For example, for PUCCH format 1, the network may configure only one specific PUCCH resource corresponding to a specific combination of {PRB index, CS value, OCC index} to the UE. The UE may perform the PRS/SRS request operation and on-demand reporting request operation, depending on modulation symbols (e.g., BPSK/QPSK symbols) carried on a UCI sequence in the corresponding PUCCH resource (and/or depending on bit field(s), bit state(s), etc.).

For example, a common single PUCCH resource, PUCCH resource #1 may be allocated to the UE for the PRS request (or SRS request) and on-demand reporting.

For example, in the case of one bit, the one bit may be configured as follows.

Bit 0: PRS request (or SRS request)

Bit 1: on-demand reporting request

For example, in the case of two bits, the two bits may be configured as follows.

State 00: on-demand PRS request

State 01: on-demand SRS request

State 10: on-demand SRS + on-demand PRS (joint request)

State 11: on-demand reporting request

As an example of the on-demand reporting, positioning measurement reporting may be considered.

For example, the UE may perform BPSK/QPSK modulation and transmit PUCCH resource #1 by mapping modulation symbols corresponding to the bit state/information onto PUCCH resource #1.

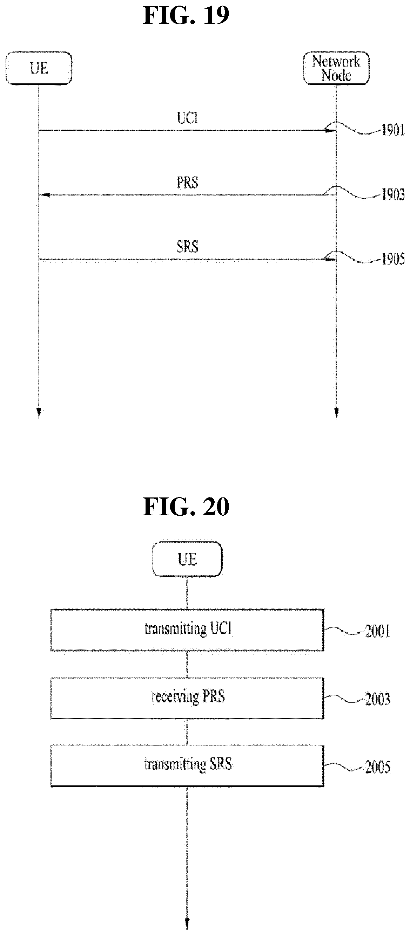

FIG. 19 is a diagram schematically illustrating a method of operating a UE and a network node according to various embodiments.

FIG. 20 is a flowchart illustrating a method of operating the UE according to various embodiments.

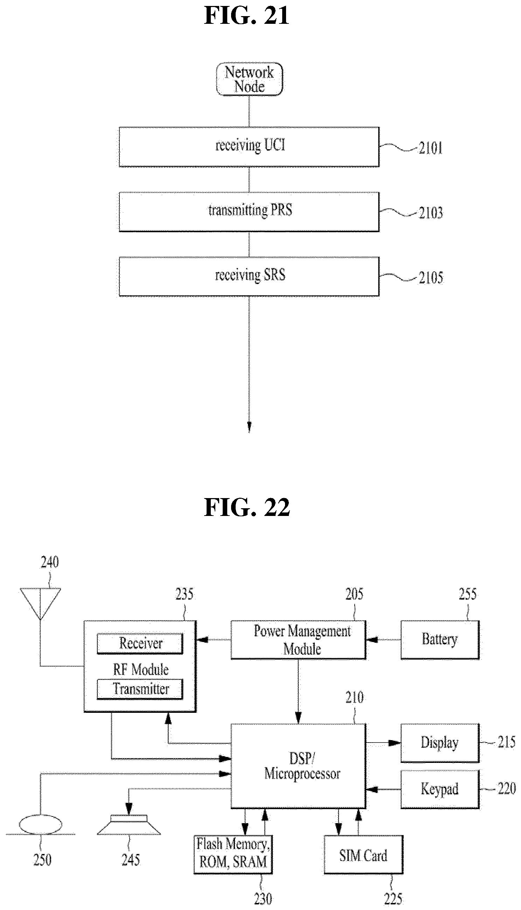

FIG. 21 is a flowchart illustrating a method of operating the network node according to various embodiments. For example, the network node may be a TP, a BS, a cell, a location server, an LMF, and/or any device that performs the same operation.

Referring to FIGS. 19 to 21, in operations 1901, 2001, and 2101 according to various embodiments, the UE may transmit UCI, and the network node may receive the UCI. According to various embodiments, the UCI may include one or more bits for a request for an RS for positioning.

In operations 1903, 2003, and 2103 according to various embodiments, the network node may transmit a PRS, and the UE may receive the RPS. According to various embodiments, when the one or more bits have a first value, the network node may transmit first resource configuration information for the UE to receive the PRS, and the UE may receive the first resource configuration information.

In operations 1905, 2005, and 2105 according to various embodiments, the UE may transmit an SRS, and the UE may receive the SRS. According to various embodiments, when the one or more bits have a second value, the network node may transmit second resource configuration information for the UE to transmit the SRS, and the UE may receive the second resource configuration information. According to various embodiments, when the one or more bits have the second value, the UE may transmit the SRS based on the second resource configuration information, and the network node may receive the SRS.

The operations of the UE and/or network node according to various embodiments may be explained and performed based on the details described in Sections 1 to 3.

Since examples of the above-described proposal method may also be included in one of implementation methods of the various embodiments, it is obvious that the examples are regarded as a sort of proposed methods. Although the above-proposed methods may be independently implemented, the proposed methods may be implemented in a combined (aggregated) form of a part of the proposed methods. A rule may be defined such that the BS informs the UE of information as to whether the proposed methods are applied (or information about rules of the proposed methods) through a predefined signal (e.g., a physical layer signal or a higher-layer signal).

## 4. Exemplary Configurations of Devices Implementing Various embodiments

### 4.1. Exemplary configurations of devices to which various embodiments are applied

FIG. 22 is a diagram illustrating a device that implements various embodiments.

The device illustrated in FIG. 22 may be a UE and/or a BS (e.g., eNB or gNB or TP) and/or a location server (or LMF) which is adapted to perform the above-described mechanism, or any device performing the same operation.

Referring to FIG. 22, the device may include a digital signal processor (DSP)/microprocessor 210 and a radio frequency (RF) module (transceiver) 235. The DSP/microprocessor 210 is electrically coupled to the transceiver 235 and controls the transceiver 235. The device may further include a power management module 205, a battery 255, a display 215, a keypad 220, a SIM card 225, a memory device 230, an antenna 240, a speaker 245, and an input device 250, depending on a designer, s selection.

Particularly, FIG. 22 may illustrate a UE including a receiver 235 configured to receive a request message from a network and a transmitter 235 configured to transmit timing transmission/reception timing information to the network. These receiver and transmitter may form the transceiver 235. The UE may further include a processor 210 coupled to the transceiver 235.

Further, FIG. 22 may illustrate a network device including a transmitter 235 configured to transmit a request message to a UE and a receiver 235 configured to receive timing transmission/reception timing information from the UE. These transmitter and receiver may form the transceiver 235. The network may further include the processor 210 coupled to the transceiver 235. The processor 210 may calculate latency based on the transmission/reception timing information.

A processor of a UE (or a communication device included in the UE) and/or a BS (or a communication device included in the BS) and/or a location server (or a communication device included in the location server) may operate by controlling a memory, as follows.

According to various embodiments, the UE or the BS or the location server may include at least one transceiver, at least one memory, and at least one processor coupled to the at least one transceiver and the at least one memory. The at least one memory may store instructions which cause the at least one processor to perform the following operations.

The communication device included in the UE or the BS or the location server may be configured to include the at least one processor and the at least one memory. The communication device may be configured to include the at least one transceiver or to be coupled to the at least one transceiver without including the at least one transceiver.

The TP and/or the BS and/or the cell and/or the location server and/or the LMF and/or any device performing the same operation may be referred to as a network node.

According to various embodiments, the at least one processor included in the UE (or at least one processor of the communication device included in the UE) may be configured to transmit UCI over a PUCCH, where the UCI may include one or more bits for a request for an RS for positioning.

Based on the one or more bits having a first value, the at least one processor may be configured to: (i) receive first resource configuration information for reception of a PRS for the positioning; and (ii) receive the PRS based on the first resource configuration information. Based on the one or more bits having a second value, the at least one processor may be configured to: (i) receive second resource configuration information for transmission of an SRS for the positioning; and (ii) transmit the SRS based on the second resource configuration information.

According to various embodiments, the at least one processor included in the network node (or at least one processor of the communication device included in the network node) may be configured to: receive UCI over a PUCCH, where the UCI may include one or more bits for a request for an RS for positioning. Based on the one or more bits having a first value, the at least one processor may be configured to: (i) transmit first resource configuration information for transmission of a PRS for the positioning; and (ii) transmit the PRS related to the first resource configuration information. Based on the one or more bits having a second value, the at least one processor may be configured to: (i) transmit second resource configuration information for transmission of an SRS for the positioning; and (ii) receive the SRS related to the second resource configuration information.

Specific operations of the UE and/or the network node according to the above-described various embodiments may be described and performed based on Section 1 to Section 3 described before.

Unless contradicting each other, various embodiments may be implemented in combination. For example, (the processor included in) the UE and/or the network node according to various embodiments may perform operations in combination of the embodiments of the afore-described in Section 1 to Section 3, unless contradicting each other.

**4.2. Example of communication system to which various embodiments of the present disclosure are applied**

Various embodiments of the present disclosure have been mainly described in relation to data transmission and reception between a BS and a UE in a wireless communication system. However, various embodiments of the present disclosure are not limited thereto. For example, various embodiments of the present disclosure may also relate to the following technical configurations.

The various descriptions, functions, procedures, proposals, methods, and/or operational flowcharts of the various embodiments of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

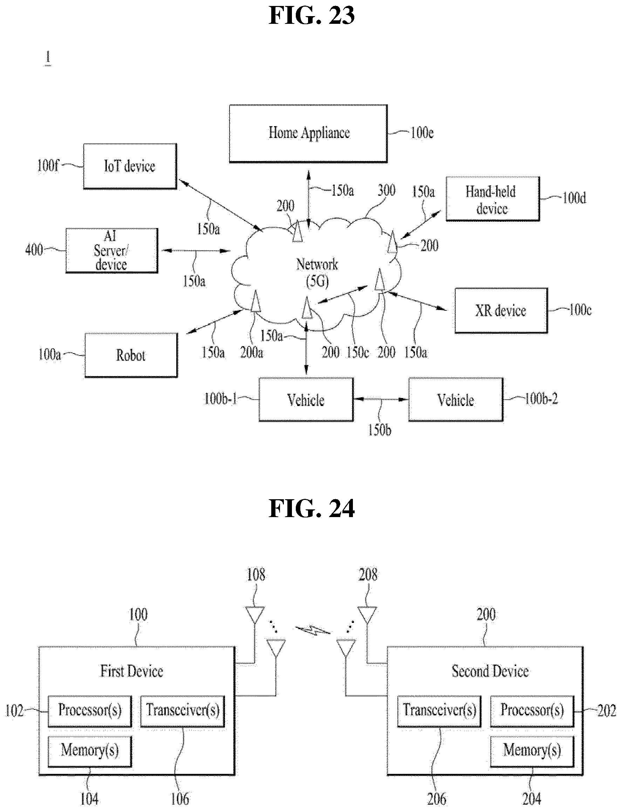

FIG. 23 illustrates an example of communication system to which various embodiments of the present disclosure are applied.

Referring to FIG. 23, a communication system 1 applied to the various embodiments of the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the various embodiments of the present disclosure.

Example of wireless devices to which various embodiments of the present disclosure are applied

FIG. 24 illustrates example of wireless devices to which various embodiments of the present disclosure are applicable.

Referring to FIG. 24, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23 .

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the various embodiments of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the various embodiments of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

According to various embodiments of the present disclosure, one or more memories (e.g., 104 or 204) may store instructions or programs which, when executed, cause one or more processors operably coupled to the one or more memories to perform operations according to various embodiments or implementations of the present disclosure.

According to various embodiments of the present disclosure, a computer-readable storage medium may store one or more instructions or computer programs which, when executed by one or more processors, cause the one or more processors to perform operations according to various embodiments or implementations of the present disclosure.

According to various embodiments of the present disclosure, a processing device or apparatus may include one or more processors and one or more computer memories connected to the one or more processors. The one or more computer memories may store instructions or programs which, when executed, cause the one or more processors operably coupled to the one or more memories to perform operations according to various embodiments or implementations of the present disclosure.

Example of using wireless devices to which various embodiments of the present disclosure are applied

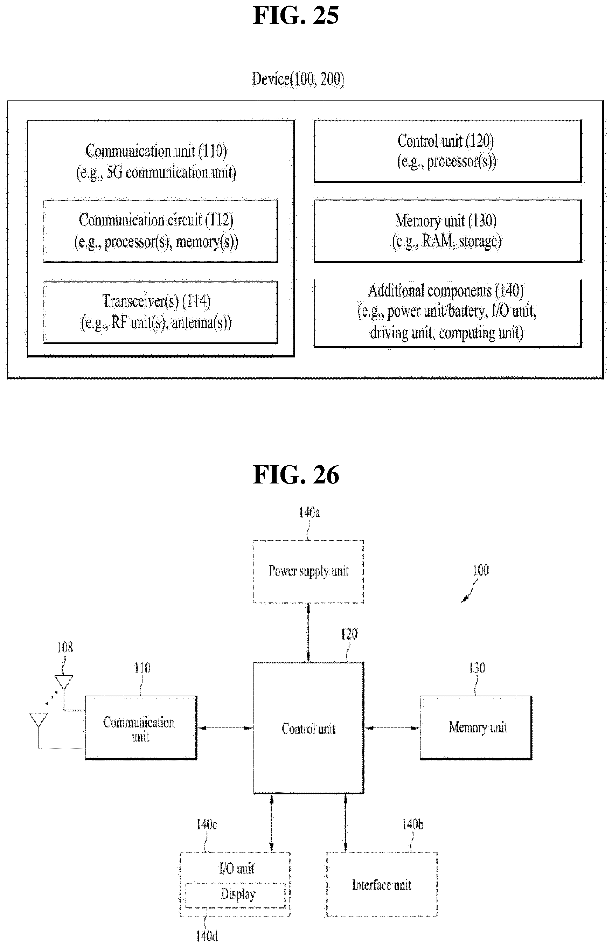

FIG. 25 illustrates other example of wireless devices to which various embodiments of the present disclosure are applied. The wireless devices may be implemented in various forms according to a use case/service (see FIG. 23).

Referring to FIG. 25, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 24. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast terminal, a hologram device, a public safety device, an MTC device, a medicine device, a Fintech device (or a finance device), a security device, a climate/environment device, the AI server/device (400 of FIG. 23), the BSs (200 of FIG. 23), a network node, etc. The wireless device may be used in a mobile or fixed place according to a use-example/service .

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 25 will be described in detail with reference to the drawings.

Example of portable device to which various embodiments of the present disclosure are applied

FIG. 26 illustrates an example of portable device to which various embodiments of the present disclosure are applied. The portable device may be any of a smartphone, a smartpad, a wearable device (e.g., a smartwatch or smart glasses), and a portable computer (e.g., a laptop). A portable device may also be referred to as mobile station (MS), user terminal (UT), mobile subscriber station (MSS), subscriber station (SS), advanced mobile station (AMS), or wireless terminal (WT).

Referring to FIG. 26, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 25, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Example of vehicle or autonomous driving vehicle to which various embodiments of the present disclosure

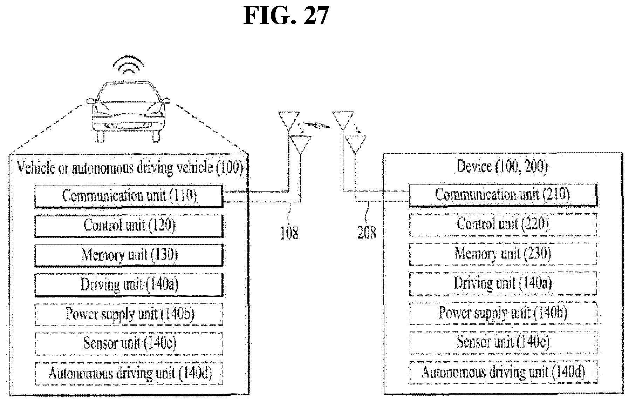

FIG. 27 illustrates an example of vehicle or autonomous driving vehicle to which various embodiments of the present disclosure. The vehicle or autonomous driving vehicle may be implemented as a mobile robot, a car, a train, a manned/unmanned aerial vehicle (AV), a ship, or the like.

Referring to FIG. 27, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

In summary, various embodiments of the present disclosure may be implemented through a certain device and/or UE.

For example, the certain device may be any of a BS, a network node, a transmitting UE, a receiving UE, a wireless device, a wireless communication device, a vehicle, a vehicle equipped with an autonomous driving function, an unmanned aerial vehicle (UAV), an artificial intelligence (AI) module, a robot, an augmented reality (AR) device, a virtual reality (VR) device, and other devices.

For example, a UE may be any of a personal digital assistant (PDA), a cellular phone, a personal communication service (PCS) phone, a global system for mobile (GSM) phone, a wideband CDMA (WCDMA) phone, a mobile broadband system (MBS) phone, a smartphone, and a multi-mode multi-band (MM-MB) terminal.

A smartphone refers to a terminal taking the advantages of both a mobile communication terminal and a PDA, which is achieved by integrating a data communication function being the function of a PDA, such as scheduling, fax transmission and reception, and Internet connection in a mobile communication terminal. Further, an MM-MB terminal refers to a terminal which has a built-in multi-modem chip and thus is operable in all of a portable Internet system and other mobile communication system (e.g., CDMA 2000, WCDMA, and so on).

EP 4 280 520 A1

Alternatively, the UE may be any of a laptop PC, a hand-held PC, a tablet PC, an ultrabook, a slate PC, a digital broadcasting terminal, a portable multimedia player (PMP), a navigator, and a wearable device such as a smartwatch, smart glasses, and a head mounted display (HMD). For example, a UAV may be an unmanned aerial vehicle that flies under the control of a wireless control signal. For example, an HMD may be a display device worn around the head. For example, the HMD may be used to implement AR or VR.

The wireless communication technology in which various embodiments are implemented may include LTE, NR, and 6G, as well as narrowband Internet of things (NB-IoT) for low power communication. For example, the NB-IoT technology may be an example of low power wide area network (LPWAN) technology and implemented as the standards of LTE category (CAT) NB1 and/or LTE Cat NB2. However, these specific appellations should not be construed as limiting NB-IoT. Additionally or alternatively, the wireless communication technology implemented in a wireless device according to various embodiments may enable communication based on LTE-M. For example, LTE-M may be an example of the LPWAN technology, called various names such as enhanced machine type communication (eMTC). For example, the LTE-M technology may be implemented as, but not limited to, at least one of 1) LTE CAT 0, 2) LTE Cat M1, 3) LTE Cat M2, 4) LTE non-bandwidth limited (non-BL), 5) LTE-MTC, 6) LTE machine type communication, and/or 7) LTE M. Additionally or alternatively, the wireless communication technology implemented in a wireless device according to various embodiments may include, but not limited to, at least one of ZigBee, Bluetooth, or LPWAN in consideration of low power communication. For example, ZigBee may create personal area networks (PANs) related to small/low-power digital communication in conformance to various standards such as IEEE 802.15.4, and may be referred to as various names.

Various embodiments may be implemented in various means. For example, various embodiments may be implemented in hardware, firmware, software, or a combination thereof.

In a hardware configuration, the methods according to exemplary embodiments may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the various embodiments may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

Those skilled in the art will appreciate that the various embodiments may be carried out in other specific ways than those set forth herein without departing from the spirit and essential characteristics of the various embodiments. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

## INDUSTRIAL APPLICABILITY

The various embodiments are applicable to various wireless access systems including a 3GPP system, and/or a 3GPP2 system. Besides these wireless access systems, the various embodiments are applicable to all technical fields in which the wireless access systems find their applications. Moreover, the proposed method can also be applied to mmWave communication using an ultra-high frequency band.

## Claims

1. A method performed by a user equipment (UE) in a wireless communication system, the method comprising:

transmitting uplink control information (UCI) over a physical uplink control channel (PUCCH), wherein the UCI comprises one or more bits for a request for a reference signal for positioning;
based on the one or more bits having a first value, receiving first resource configuration information for reception of a positioning reference signal (PRS) for the positioning and receiving the PRS based on the first resource configuration information; and
based on the one or more bits having a second value, receiving second resource configuration information for transmission of a sounding reference signal (SRS) for the positioning and transmitting the SRS based on the second resource configuration information.

2. The method of claim 1, wherein based on the one or more bits being one bit in size:

the one or more bits having the first value are mapped to a request for an on-demand PRS; and
the one or more bits having the second value are mapped to a request for an on-demand SRS.

3. The method of claim 1, wherein based on the one or more bits being two bits in size:

the one or more bits having the first value are mapped to a request for an on-demand PRS;
the one or more bits having the second value are mapped to a request for an on-demand SRS; and
the one or more bits having a third value are mapped to a request for both the on-demand PRS and the on-demand SRS.

4. The method of claim 3, further comprising, based on the one or more bits having the third value:

receiving the first resource configuration information;
receiving the PRS based on the first resource configuration information;
receiving the second resource configuration information; and
transmitting the SRS based on the second resource configuration information.

5. The method of claim 3, wherein the one or more bits having a fourth value are mapped to at least one of a reserved state or an on-demand report.

6. The method of claim 1, wherein the PUCCH is PUCCH format 0 or PUCCH format 1,

wherein the one or more bits comprise information obtained by jointly encoding at least one of the request for the reference signal, hybrid automatic repeat request (HARQ) acknowledgment/negative-acknowledgment (ACK/NACK) information, scheduling request (SR) information, or channel state information (CSI), and
wherein the jointly encoded information is based on a cyclic shift index related to generation of a sequence for the PUCCH.

7. The method of claim 1, wherein the first resource configuration information comprises at least one of information on one or more PRS resources, information on a PRS resource set including the one or more PRS resources, information on a positioning frequency layer, or information on one or more transmission and reception points (TRPs), and

wherein the second resource configuration information comprises at least one of information on one or more SRS resources or information on an SRS resource set including the one or more SRS resources, and
wherein the first resource configuration information and the second resource configuration information are received over a group-common physical downlink control channel (GC-PDCCH).

8. The method of claim 7, wherein the GC-PDCCH comprises a bit field indicating whether the GC-PDCCH is related to triggering of the reference signal or a cyclic redundancy check (CRC) scrambled with a radio network temporary identifier (RNTI) indicating whether the GC-PDCCH is related to triggering of the reference signal.

9. A user equipment (UE) configured to operate in a wireless communication system, the UE comprising:

a transceiver; and
at least one processor connected to the transceiver,
wherein the at least one processor is configured to:

transmit uplink control information (UCI) over a physical uplink control channel (PUCCH), wherein the UCI comprises one or more bits for a request for a reference signal for positioning;
based on the one or more bits having a first value, receive first resource configuration information for reception of a positioning reference signal (PRS) for the positioning and receive the PRS based on the first resource configuration information; and
based on the one or more bits having a second value, receive second resource configuration information for transmission of a sounding reference signal (SRS) for the positioning and transmit the SRS based on the second resource configuration information.

**10.** The UE of claim 9, wherein based on the one or more bits being two bits in size:

the one or more bits having the first value are mapped to a request for an on-demand PRS;
the one or more bits having the second value are mapped to a request for an on-demand SRS; and
the one or more bits having a third value are mapped to a request for both the on-demand PRS and the on-demand SRS.

**11.** The UE of claim 9, wherein the at least one processor is configured to communicate with at least one of a mobile terminal, a network, or an autonomous vehicle other than a vehicle including the UE.

**12.** A method performed by a base station in a wireless communication system, the method comprising:

receiving uplink control information (UCI) over a physical uplink control channel (PUCCH), wherein the UCI comprises one or more bits for a request for a reference signal for positioning;
based on the one or more bits having a first value, transmitting first resource configuration information for transmission of a positioning reference signal (PRS) for the positioning and transmitting the PRS related to the first resource configuration information; and
based on the one or more bits having a second value, transmitting second resource configuration information for transmission of a sounding reference signal (SRS) for the positioning and receiving the SRS related to the second resource configuration information.

**13.** A base station configured to operate in a wireless communication system, the base station comprising:

a transceiver; and
at least one processor connected to the transceiver,
wherein the at least one processor is configured to:

receive uplink control information (UCI) over a physical uplink control channel (PUCCH), wherein the UCI comprises one or more bits for a request for a reference signal for positioning;
based on the one or more bits having a first value, transmit first resource configuration information for transmission of a positioning reference signal (PRS) for the positioning and transmit the PRS related to the first resource configuration information; and

based on the one or more bits having a second value, transmit second resource configuration information for transmission of a sounding reference signal (SRS) for the positioning and receive the SRS related to the second resource configuration information.

**14.** An apparatus configured to operate in a wireless communication system, the apparatus comprising:

at least one processor; and
at least one memory operably connected to the at least one processor and configured to store one or more instructions that, based on execution, cause the at least one processor to perform operations comprising:

transmitting uplink control information (UCI) over a physical uplink control channel (PUCCH), wherein the UCI comprises one or more bits for a request for a reference signal for positioning;
based on the one or more bits having a first value, receiving first resource configuration information for reception of a positioning reference signal (PRS) for the positioning and receiving the PRS based on the first resource configuration information; and
based on the one or more bits having a second value, receiving second resource configuration information for transmission of a sounding reference signal (SRS) for the positioning and transmitting the SRS based on the second resource configuration information.

**15.** A non-transitory processor-readable medium configured to store one or more instructions that cause at least one processor to perform operations comprising:

transmitting uplink control information (UCI) over a physical uplink control channel (PUCCH), wherein the UCI comprises one or more bits for a request for a reference signal for positioning;
based on the one or more bits having a first value, receiving first resource configuration information for reception

39

of a positioning reference signal (PRS) for the positioning and receiving the PRS based on the first resource configuration information; and

based on the one or more bits having a second value, receiving second resource configuration information for transmission of a sounding reference signal (SRS) for the positioning and transmitting the SRS based on the second resource configuration information.

## FIG. 1

Initial Cell Search — PSS/SSS & [DLRS] & PBCH — S11

System Information Reception — PDCCH/PDSCH (BCCH) — S12

Random Access Procedure — PRACH (S13) — PDCCH/PDSCH (S14) — PRACH (S15) — PDCCH/PDSCH (S16)

General DL/UL Tx/Rx — S18 — PDCCH/PDSCH (S17) — PUSCH/PUCCH
- DL/UL ACK/NACK
- UE CQI/PMI/Rank Report using PUSCH and PUCCH

EP 4 280 520 A1

# FIG. 2

Radio Frame 10ms

Fixed Size

Subframe 1ms

| 0 | 1 | 2 | 3 | 4 | 5 | 6 | 7 | 8 | 9 |

Subframe = {1, 2, 4} Slots

Slot

| 0 | 1 | 2 | 3 |

Subframe = {7, 14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot (URLLC)

Mini-Slot = {2, 4, 7} Symbols

# FIG. 3

Resource grid

A carrier
(up to 3300 subcarriers, i.e., 275 RBs)

A BWP

1 RB = 12 subcarriers

1 RE

1 subcarrier

1 symbol

l = 0 · · · · ·

k = 0

# FIG. 4

| PDCCH | Gap | Long PUCCH | | Short PUCCH |
| | | PDSCH/PUSCH | | |
| | | Long PUCCH | | |

One slot

f

t

43

# FIG. 5

D or U or Unknown

(a)

0~13 Downlink     1~13 Downlink     0~13 Uplink

(b)

D - Unknown - U      D - Unknown - U

(c)

# FIG. 6

Reference Source

GNSS signals (B)

LPP

Measurements(A,B or A+B) or Location

Assistance Data

Target Device

UE/SET

Location server

E-SMLC/SLP/LMF

- E-CID Location Information Transfer
- OTDOA Information Transfer
- Reporting of General Error Situations

radio signals (A)

NRPPa

Reference Source

ACCESS NODE / BS / TS / NG-RAN

**FIG. 7**

EP 4 280 520 A1

# FIG. 8

EP 4 280 520 A1

FIG. 9

**FIG. 10**

| NRPPa | HTTP/2 | TLS TCP | IP | L2 | L1 | LMF |

NLs

| HTTP/2 | TLS TCP | IP | L2 | L1 |
| NGAP | SCTP | IP | L2 | L1 | AMF |

NG-C

| NRPPa | NGAP | SCTP | IP | L2 | L1 | NG RAN |

**FIG. 11**

# FIG. 12

Initiating Device

Responding Device

1301

transmit RTT measurement request

transmit RTT measurement signal at $t_0$

Receive RTT measurement request

TOA measurement $t_1$

1303

1305

transmit RTT measurement signal at $t_2$

TOA measurement $t_3$

transmit $[t_2 - t_1]$

$RTT = t_3 - t_0 - [t_2 - t_1]$

1307

(a)

$d_1$

$BS_1$

$d_2$

$BS_2$

$d_3$

$BS_3$

Target Device Location

(b)

# FIG. 13

**FIG. 14**

(a) UE
- 1401(a) configuration information
- 1403(a) receiving signal related to configuration information
- 1405(a) transmitting information related to positioning

(b) TRP
- 1401(b) receiving/transmitting configuration information
- 1403(b) transmitting signal related to configuration information
- 1405(b) receiving/transmitting information related to positioning

(c) location server /LMF
- 1401(c) transmitting configuration information
- 1405(c) receiving information related to positioning

## FIG. 15

## FIG. 16

# FIG. 17

# FIG. 18

# FIG. 19

UE

Network Node

UCI ——————1901

PRS ——————1903

SRS ——————1905

# FIG. 20

UE

| transmitting UCI | 2001 |

| receiving PRS | 2003 |

| transmitting SRS | 2005 |

# FIG. 21

Network Node

| receiving UCI | ~2101 |
| transmitting PRS | ~2103 |
| receiving SRS | ~2105 |

# FIG. 22

240

235                                     205                        255

| Receiver |          | Power Management Module | | Battery |
| RF Module |
| Transmitter |

210

| DSP/ Microprocessor | → | Display | ~215 |
|                     | ← | Keypad | ~220 |

| Flash Memory, ROM, SRAM |          | SIM Card |

250          245          230                    225

# FIG. 23

1

Home Appliance —100e

100f— IoT device

Hand-held device —100d

200

150a    300    150a

200

400— AI Server/ device

150a

Network (5G)

150a

XR device —100c

100a— Robot

150a  200a    150a    200 150c 200 150a

100b-1 — Vehicle ◄—► Vehicle —100b-2

150b

# FIG. 24

108        208

100                                          200

First Device                                  Second Device

102— Processor(s)   Transceiver(s)      Transceiver(s)   Processor(s) —202

Memory(s)                                 Memory(s)

104        106                            206        204

# FIG. 25

Device(100, 200)

| | |
|---|---|
| **Communication unit (110)** (e.g., 5G communication unit) | **Control unit (120)** (e.g., processor(s)) |
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

# FIG. 26

140a

Power supply unit

100

108

110

120

130

Communication unit

Control unit

Memory unit

140c

140b

I/O unit

Interface unit

Display

140d

EP 4 280 520 A1

# FIG. 27

Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)

108    208

Device (100, 200)
Communication unit (210)
Control unit (220)
Memory unit (230)
Driving unit (140a)
Power supply unit (140b)
Sensor unit (140c)
Autonomous driving unit (140d)

58

<div align="center">

**INTERNATIONAL SEARCH REPORT**

</div>

| International application No. |
|---|
| **PCT/KR2022/000625** |

| **A.** | **CLASSIFICATION OF SUBJECT MATTER** |
|---|---|
| | **H04L 5/00**(2006.01)i; **H04W 64/00**(2009.01)i; **H04W 72/12**(2009.01)i |

According to International Patent Classification (IPC) or to both national classification and IPC

| **B.** | **FIELDS SEARCHED** |
|---|---|

Minimum documentation searched (classification system followed by classification symbols)

H04L 5/00(2006.01); H04W 24/10(2009.01); H04W 64/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 업링크 제어 정보(uplink control information, UCI), 측위(positioning), 온-디맨드(on-demand), PRS(positioning reference signal), SRS(sounding reference signal), 요청(request), 비트(bit)

| **C.** | **DOCUMENTS CONSIDERED TO BE RELEVANT** | |
|---|---|---|
| Category* | Citation of document, with indication, where appropriate, of the relevant passages | Relevant to claim No. |
| A | QUALCOMM INCORPORATED. On-Demand PRS. R2-2010097, 3GPP TSG-RAN WG2 Meeting #112-e. 23 October 2020.<br>See pages 6-7 and 9-10. | 1-15 |
| A | FUTUREWEI. Positioning Enhancements. R1-2007552, 3GPP TSG RAN WG1 Meeting #103-e. 01 November 2020.<br>See section 2.1. | 1-15 |
| A | MODERATOR (OPPO). Summary#1 on UCI enhancements for R16 URLLC. R1-2009044, 3GPP TSG RAN WG1 #103-e. 01 November 2020.<br>See section 2. | 1-15 |
| A | LENOVO et al. On Potential NR Positioning Enhancements. R1-2007998, 3GPP TSG RAN WG1#103-e. 01 November 2020.<br>See pages 1-2. | 1-15 |
| A | WO 2016-129908 A1 (LG ELECTRONICS INC.) 18 August 2016 (2016-08-18)<br>See claims 1-12. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 April 2022** | **27 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/000625**

| Patent document cited in search report | | | Publication date (day/month/year) | Patent family member(s) | | | Publication date (day/month/year) |
|---|---|---|---|---|---|---|---|
| WO | 2016-129908 | A1 | 18 August 2016 | US | 10225759 | B2 | 05 March 2019 |
| | | | | US | 2018-0007576 | A1 | 04 January 2018 |

Form PCT/ISA/210 (patent family annex) (July 2019)